# EUROPEAN PATENT SPECIFICATION

(11) **EP 4 150 878 B1**
(45) Date of publication and mention of the grant of the patent: **26.08.2026**
(21) Application number: 21729106.1
(22) Date of filing: 06.05.2021
(51) Int. Cl.: H04L 9/40, H04W 12/03, H04W 12/043, H04W 12/069, H04L 67/00, G08G 5/55

(54) **PROVIDING SECURITY CREDENTIALS TO AN UNMANNED AERIAL VEHICLE**
BEREITSTELLUNG VON SICHERHEITSNACHWEISEN FÜR EIN UNBEMANNTES LUFTFAHRZEUG
FOURNITURE DE JUSTIFICATIFS D'IDENTITÉ DE SÉCURITÉ À UN VÉHICULE AÉRIEN SANS PILOTE

(30) Priority: 12.05.2020 GR 20200100241
(43) Date of publication of application: 22.03.2023
(73) Proprietor: QUALCOMM INCORPORATED, San Diego, California 92121-1714 (US)
(72) Inventor: FACCIN, Stefano, San Diego, CA 92121-1714 (US); ZISIMOPOULOS, Haris, San Diego, CA 92121-1714 (US)
(74) Representative: Bardehle Pagenberg Partnerschaft mbB Patentanwälte Rechtsanwälte
(86) International application number: PCT/US2021/031045
(87) International publication number: WO 2021/231165

(56) References cited:
- WO-A1-2019/068654
- WO-A1-2020/068765
- US-A1- 2019 261 185

## Description

### FIELD OF TECHNOLOGY

The following relates generally to wireless communications and to techniques for providing security credentials to unmanned aerial vehicles (UAVs).

### BACKGROUND

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal FDMA (OFDMA), or discrete Fourier transform spread orthogonal frequency division multiplexing (DFT-S-OFDM). A wireless multiple-access communications system may include one or more base stations or one or more network access nodes, each simultaneously supporting communication for multiple communication devices, which may be otherwise known as user equipment (UE).
WO 2020/068765 A1 relates to methods and apparatuses for securely connecting to a private local area network (LAN). In accordance with one embodiment, an apparatus may receive, from a private LAN that has been provisioned with first identifying information associated with the apparatus, a first broadcast message comprising an invitation to connect to the private LAN and the first identifying information. The apparatus may send, based on the first broadcast message comprising the first identifying information, a request for system information and second identifying information associated with the apparatus. The apparatus may receive, from the private LAN, the requested system information. The apparatus may send, based on the requested system information, a registration request and third identifying information associated with the apparatus. The apparatus may receive, from the private LAN, acceptance of the registration request.

### SUMMARY

The invention is defined by the independent claims that accompany this disclosure. Any examples and embodiments of the description not falling within the scope of the claims do not form part of the invention as defined by the independent claims.

The described techniques relate to improved methods, systems, devices, and apparatuses that support techniques for providing security credentials to a user equipment (UE) associated with an unmanned aerial vehicle (UAV) in an unmanned aerial system (UAS). Generally, the described techniques provide for enabling secure communications for UAVs through signaling provided by a terrestrial cellular network. For example, a UE associated with a UAV may establish a connection with one or more network entities, such as a unified data management (UDM) entity and an access and mobility management function (AMF), and receive a security configuration from the UDM entity (e.g., via the AMF). In some cases, the security configuration may include one or more security credentials that may enable communications between the UE and a service supplier (e.g., a UAV flight service supplier (UFSS), a UAS service supplier (USS), or both). In some examples, the UDM entity may generate the security configuration after the UE (e.g., and the UAV) establishes the connection with the network entities (the AMF, core network, the UDM, etc.). Additionally or alternatively, the service supplier (the UFSS, USS, etc.) may generate the security configuration (e.g., after receiving a registration request message form the UE or the UAV) and may signal the security configuration to the UDM that then forwards the security configuration to the UE (e.g., via the AMF).

A method of wireless communication at a UE associated with a UAV in a terrestrial cellular network is described. The method may include performing a registration procedure with one or more network functions for communications with an unmanned aerial system service supplier, the one or more network functions including an AMF, receiving, from a UDM entity via the AMF, an indication of a security configuration in a non-access stratum (NAS) transport message, the security configuration including one or more security credentials to enable communications between the UE and the unmanned aerial system service supplier, and communicating with the unmanned aerial system service supplier based on the one or more security credentials of the security configuration.

An apparatus for wireless communication at a UE associated with a UAV in a terrestrial cellular network is described. The apparatus may include a processor, memory coupled with the processor, and instructions stored in the memory. The instructions may be executable by the processor to cause the apparatus to perform a registration procedure with one or more network functions for communications with an unmanned aerial system service supplier, the one or more network functions including an AMF, receive, from a UDM entity via the AMF, an indication of a security configuration in a NAS transport message, the security configuration including one or more security credentials to enable communications between the UE and the unmanned aerial system service supplier, and communicate with the unmanned aerial system service supplier based on the one or more security credentials of the security configuration.

Another apparatus for wireless communication at a UE associated with a UAV in a terrestrial cellular network is described. The apparatus may include means for performing a registration procedure with one or more network functions for communications with an unmanned aerial system service supplier, the one or more network functions including an AMF, receiving, from a UDM entity via the AMF, an indication of a security configuration in a NAS transport message, the security configuration including one or more security credentials to enable communications between the UE and the unmanned aerial system service supplier, and communicating with the unmanned aerial system service supplier based on the one or more security credentials of the security configuration.

A non-transitory computer-readable medium storing code for wireless communication at a UE associated with a UAV in a terrestrial cellular network is described. The code may include instructions executable by a processor to perform a registration procedure with one or more network functions for communications with an unmanned aerial system service supplier, the one or more network functions including an AMF, receive, from a UDM entity via the AMF, an indication of a security configuration in a NAS transport message, the security configuration including one or more security credentials to enable communications between the UE and the unmanned aerial system service supplier, and communicate with the unmanned aerial system service supplier based on the one or more security credentials of the security configuration.

Some examples of the method, apparatuses, and non-transitory computer-readable medium described herein may further include operations, features, means, or instructions for transmitting, to the UDM entity, an acknowledgment message indicating that the UE successfully received the indication of the security configuration, where the communicating with the unmanned aerial system service supplier may be based on the acknowledgment message.

Some examples of the method, apparatuses, and non-transitory computer-readable medium described herein may further include operations, features, means, or instructions for transmitting, to the unmanned aerial system service supplier, a registration request for the communications between the UE and the unmanned aerial system service supplier, the registration request including registration information corresponding to the UE.

Some examples of the method, apparatuses, and non-transitory computer-readable medium described herein may further include operations, features, means, or instructions for determining to transmit the registration request to the unmanned aerial system service supplier based on an identity of the unmanned aerial system service supplier received in the indication of the security configuration.

Some examples of the method, apparatuses, and non-transitory computer-readable medium described herein may further include operations, features, means, or instructions for receiving, from the unmanned aerial system service supplier, a registration response message in response to the registration request, the registration response message including an identifier for the UE, where the communicating with the unmanned aerial system service supplier may be based on the identifier for the UE in conjuncture with the security configuration.

In some examples of the method, apparatuses, and non-transitory computer-readable medium described herein, the registration request may be protected based on the one or more security credentials received from the UDM entity.

In some examples of the method, apparatuses, and non-transitory computer-readable medium described herein, the indication of the security configuration may be received based on transmitting the registration request.

In some examples of the method, apparatuses, and non-transitory computer-readable medium described herein, the registration request includes a generic public subscription identifier (GPSI) of the UE, and where the indication of the security configuration may be received based on the GPSI of the UE.

Some examples of the method, apparatuses, and non-transitory computer-readable medium described herein may further include operations, features, means, or instructions for determining to remove security credentials previously used by the UE for previous communications.

In some examples of the method, apparatuses, and non-transitory computer-readable medium described herein, the security configuration includes a UE identity used for identifying the UE in the communications between the UE and the unmanned aerial system service supplier, a certificate for the communications between the UE and the unmanned aerial system service supplier, private and public security keys to enable the communications between the UE and the unmanned aerial system service supplier, one or more security keys to be used for by the UE for broadcasting a remote identifier of the UE and for verifying received remote identifiers broadcasted by additional UEs, an identifier of the unmanned aerial system service supplier, or a combination thereof.

In some examples of the method, apparatuses, and non-transitory computer-readable medium described herein, the indication of the security configuration may be received at a hardware component of the UE.

A method of wireless communication at a UDM entity is described. The method may include transmitting, to an AMF, an indication of a security configuration, the security configuration including one or more security credentials to enable communications between a UE associated with a UAV and an unmanned aerial system service supplier, receiving, from the AMF, an acknowledgment message indicating that the UE successfully received the indication of the security configuration, and transmitting, to the unmanned aerial system service supplier, a message based on receiving the acknowledgment message, the message indicating the one or more security credentials to be used by the UE for the communications with the unmanned aerial system service supplier.

An apparatus for wireless communication at a UDM entity is described. The apparatus may include a processor, memory coupled with the processor, and instructions stored in the memory. The instructions may be executable by the processor to cause the apparatus to transmit, to an AMF, an indication of a security configuration, the security configuration including one or more security credentials to enable communications between a UE associated with a UAV and an unmanned aerial system service supplier, receive, from the AMF, an acknowledgment message indicating that the UE successfully received the indication of the security configuration, and transmit, to the unmanned aerial system service supplier, a message based on receiving the acknowledgment message, the message indicating the one or more security credentials to be used by the UE for the communications with the unmanned aerial system service supplier.

Another apparatus for wireless communication at a UDM entity is described. The apparatus may include means for transmitting, to an AMF, an indication of a security configuration, the security configuration including one or more security credentials to enable communications between a UE associated with a UAV and an unmanned aerial system service supplier, receiving, from the AMF, an acknowledgment message indicating that the UE successfully received the indication of the security configuration, and transmitting, to the unmanned aerial system service supplier, a message based on receiving the acknowledgment message, the message indicating the one or more security credentials to be used by the UE for the communications with the unmanned aerial system service supplier.

A non-transitory computer-readable medium storing code for wireless communication at a UDM entity is described. The code may include instructions executable by a processor to transmit, to an AMF, an indication of a security configuration, the security configuration including one or more security credentials to enable communications between a UE associated with a UAV and an unmanned aerial system service supplier, receive, from the AMF, an acknowledgment message indicating that the UE successfully received the indication of the security configuration, and transmit, to the unmanned aerial system service supplier, a message based on receiving the acknowledgment message, the message indicating the one or more security credentials to be used by the UE for the communications with the unmanned aerial system service supplier.

In some examples of the method, apparatuses, and non-transitory computer-readable medium described herein, transmitting the message to the unmanned aerial system service supplier further may include operations, features, means, or instructions for generating the security configuration for the communications between the UE and the unmanned aerial system service supplier, and transmitting, to the unmanned aerial system service supplier, the indication of the security configuration to enable the communications between the UE and the unmanned aerial system service supplier.

In some examples of the method, apparatuses, and non-transitory computer-readable medium described herein, the security configuration may be generated based on the UE registering to a network including the UDM entity and the AMF, no security configuration being previously delivered to the UE, a security refreshing for the UE, a trigger received from the unmanned aerial system service supplier, or a combination thereof.

Some examples of the method, apparatuses, and non-transitory computer-readable medium described herein may further include operations, features, means, or instructions for receiving, from the unmanned aerial system service supplier, the indication of the security configuration, where transmitting the indication of the security configuration to the AMF may be based on receiving the indication of the security configuration from the unmanned aerial system service supplier.

In some examples of the method, apparatuses, and non-transitory computer-readable medium described herein, transmitting the message to the unmanned aerial system service supplier further may include operations, features, means, or instructions for transmitting, to the unmanned aerial system service supplier, a parameter provision information message including the acknowledgment message indicating that the UE successfully received the indication of the security configuration.

In some examples of the method, apparatuses, and non-transitory computer-readable medium described herein, receiving the indication of the security configuration may include operations, features, means, or instructions for receiving, from the unmanned aerial system service supplier, the indication of the security configuration via a UDM services message, a network exposure function update message, or a combination thereof.

In some examples of the method, apparatuses, and non-transitory computer-readable medium described herein, transmitting the indication of the security configuration may include operations, features, means, or instructions for transmitting, to the AMF, a UDM configuration update message of parameters for the UE, where the UDM configuration update message includes the indication of the security configuration.

In some examples of the method, apparatuses, and non-transitory computer-readable medium described herein, the security configuration includes a UE identity used for identifying the UE in the communications between the UE and the unmanned aerial system service supplier, a certificate for the communications between the UE and the unmanned aerial system service supplier, private and public security keys to enable the communications between the UE and the unmanned aerial system service supplier, one or more security keys to be used by the UE for broadcasting a remote identifier of the UE and for verifying received remote identifiers broadcasted by additional UEs, an identifier of the unmanned aerial system service supplier, or a combination thereof.

A method of wireless communication at an unmanned aerial system service supplier is described. The method may include receiving, from a UE associated with a UAV, a registration request including registration information corresponding to the UE, determining one or more security credentials to enable communications between the UE and the unmanned aerial system service supplier based on the registration request, and communicating with the UE based on the one or more security credentials.

An apparatus for wireless communication at an unmanned aerial system service supplier is described. The apparatus may include a processor, memory coupled with the processor, and instructions stored in the memory. The instructions may be executable by the processor to cause the apparatus to receive, from a UE associated with a UAV, a registration request including registration information corresponding to the UE, determine one or more security credentials to enable communications between the UE and the unmanned aerial system service supplier based on the registration request, and communicate with the UE based on the one or more security credentials.

Another apparatus for wireless communication at an unmanned aerial system service supplier is described. The apparatus may include means for receiving, from a UE associated with a UAV, a registration request including registration information corresponding to the UE, determining one or more security credentials to enable communications between the UE and the unmanned aerial system service supplier based on the registration request, and communicating with the UE based on the one or more security credentials.

A non-transitory computer-readable medium storing code for wireless communication at an unmanned aerial system service supplier is described. The code may include instructions executable by a processor to receive, from a UE associated with a UAV, a registration request including registration information corresponding to the UE, determine one or more security credentials to enable communications between the UE and the unmanned aerial system service supplier based on the registration request, and communicate with the UE based on the one or more security credentials.

In some examples of the method, apparatuses, and non-transitory computer-readable medium described herein, determining the one or more security credentials may include operations, features, means, or instructions for receiving, from a UDM entity, an indication of a security configuration, the security configuration including the one or more security credentials to enable the communications between the UE and the unmanned aerial system service supplier.

In some examples of the method, apparatuses, and non-transitory computer-readable medium described herein, the security configuration may be generated by the UDM entity based on the UE registering to a network including the UDM entity, no security configuration being previously delivered to the UE, a security refreshing for the UE, a trigger received from the unmanned aerial system service supplier, or a combination thereof.

In some examples of the method, apparatuses, and non-transitory computer-readable medium described herein, determining the one or more security credentials may include operations, features, means, or instructions for generating a security configuration for the communications between the UE and the unmanned aerial system service supplier based on the registration information corresponding to the UE received in the registration request, the security configuration including the one or more security credentials.

Some examples of the method, apparatuses, and non-transitory computer-readable medium described herein may further include operations, features, means, or instructions for transmitting, to a UDM entity, an indication of the security configuration, and receiving, from the UDM entity, a parameter provision information message including an acknowledgment message indicating that the UE successfully received the indication of the security configuration, where the communicating with the UE may be based on the acknowledgment message.

In some examples of the method, apparatuses, and non-transitory computer-readable medium described herein, transmitting the indication of the security configuration may include operations, features, means, or instructions for transmitting, to the UDM entity, the indication of the security configuration via a UDM services message, a network exposure function update message, or a combination thereof.

In some examples of the method, apparatuses, and non-transitory computer-readable medium described herein, the registration request includes a GPSI of the UE, and where the one or more security credentials may be generated based on the GPSI.

In some examples of the method, apparatuses, and non-transitory computer-readable medium described herein, the one or more security credentials include a UE identity used for identifying the UE in the communications between the UE and the unmanned aerial system service supplier, a certificate for the communications between the UE and the unmanned aerial system service supplier, private and public security keys to enable the communications between the UE and the unmanned aerial system service supplier, one or more security keys to be used for by the UE for broadcasting a remote identifier of the UE and for verifying received remote identifiers broadcasted by additional UEs, an identifier of the unmanned aerial system service supplier, or a combination thereof.

### BRIEF DESCRIPTION OF THE DRAWINGS

FIG. 1 illustrates an example of a system for wireless communications that supports providing security credentials to an unmanned aerial vehicle (UAV) in accordance with aspects of the present disclosure.
FIG. 2 illustrates an example of a wireless communications system that supports techniques for providing security credentials to UAVs in accordance with aspects of the present disclosure.
FIGs. 3, 4, and 5 illustrate examples of process flows in a system that support techniques for providing security credentials to UAVs in accordance with aspects of the present disclosure.
FIGs. 6 and 7 show block diagrams of devices that support providing security credentials to UAVs in accordance with aspects of the present disclosure.
FIG. 8 shows a block diagram of a user equipment (UE) communications manager that supports providing security credentials to UAVs in accordance with aspects of the present disclosure.
FIG. 9 shows a diagram of a system including a device that supports providing security credentials to UAVs in accordance with aspects of the present disclosure.
FIGs. 10 and 11 show block diagrams of devices that support providing security credentials to UAVs in accordance with aspects of the present disclosure.
FIG. 12 shows a block diagram of a communications manager that supports providing security credentials to UAVs in accordance with aspects of the present disclosure.
FIG. 13 shows a diagram of a system including a device that supports providing security credentials to UAVs in accordance with aspects of the present disclosure.
FIGs. 14 through 19 show flowcharts illustrating methods that support providing security credentials to UAVs in accordance with aspects of the present disclosure.

### DETAILED DESCRIPTION

Unmanned aerial vehicles (UAVs), which may also be referred to as drones, may include the capability to transmit or receive wireless signals, including the transmission of various messages to other devices (e.g., to other UAVs or to ground-based devices). For example, in the United States, the Federal Aviation Administration (FAA) implemented remote identification of unmanned aircraft systems (UASs) to enable public and civil identification of UASs for safety, security, and compliance purposes. Specifically, the remote identification may enable a UAS to broadcast information that includes one or more assigned remoted identifiers (IDs) corresponding to an identity of the UAV (e.g., an aircraft ID) in addition to various parameters related to the movement of the UAV (including location, direction vector, latitude, longitude, speed, direction, altitude, etc.). As such, remote IDs may provide a way to receive information about UAVs for tracking and collision avoidance. However, the remote IDs assigned to the UAV may be falsified, presenting an oversight in security. For example, fraudulent remote IDs for a UAV may impact operations of the UAV. In some cases, fraudulent remote IDs may cause one or more UAVs to stop, reverse, land, or maneuver according to corresponding fraudulent location information in the IDs. Such a security breach may be referred to as a denial of service (DoS) attack, and may result in inefficient operation of the UAV as well as loss or damage of property.

As described herein, a user equipment (UE) associated with a UAV may receive security credentials from a network entity (e.g., from a unified data management (UDM) entity via an access and mobility management function (AMF)) to enable secure communications with a service supplier (e.g., a UAV flight service supplier (UFSS), a UAS service supplier (USS), or both). For example, the UDM entity may generate and assign the security credentials corresponding to a security configuration to the UAV. In some cases, the UDM entity may deliver the security configuration to the UE associated with the UAV (e.g., via the AMF) using a parameters update message (e.g., a non-access stratum (NAS) transport message). The UDM entity may update the UAV with the parameters by delivering protected UDM update data via national airspace system signaling (e.g., via the NAS transport message based on operator policies). In some cases, the UAV may perform a security check on received UDM update data. The UDM entity may transmit the generated security credentials to the service supplier to enable the communications between the service suppler and the UE and UAV.

Additionally or alternatively, the service supplier (e.g., the UFSS, the USS, or both) may generate the security credentials. For example, the UE associated with the UAV may first send a registration request to the service supplier. Using a generic public subscription identifier (GPSI) provided by the UE in the registration request, the service supplier may determine the UE associated with the UAV may not have a security configuration and may provide the security configuration to the UDM entity to push to the UE (e.g., via the AMF). In some cases, the UE associated with the UAV may receive one or more IDs (e.g., remote IDs) for operations over a carrier. In some cases, the one or more IDs may correspond to a broadcast remote ID (BRID), a network remote ID (NRID), or both for communications between the carrier and the service supplier. The one or more IDs may be protected by the security configuration.

Aspects of the disclosure are initially described in the context of wireless communications systems. Further examples are then provided with respect to process flows. Aspects of the disclosure are further illustrated by and described with reference to apparatus diagrams, system diagrams, and flowcharts that relate to techniques for providing security credentials to a UAV.

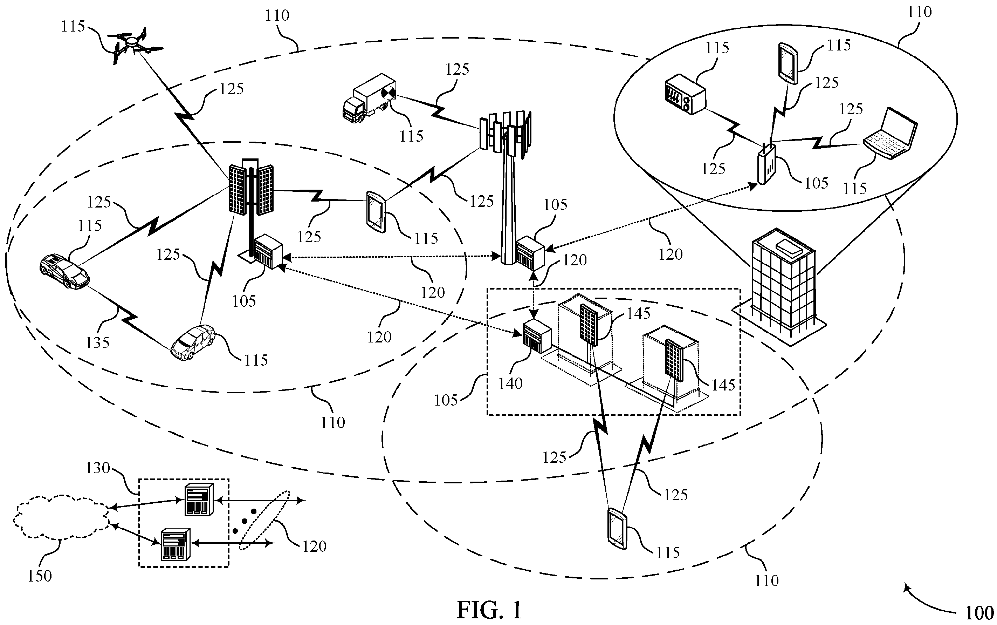

**FIG.** 1 illustrates an example of a wireless communications system 100 that supports techniques for providing security credentials to a UAV in accordance with aspects of the present disclosure. The wireless communications system 100 may include one or more base stations 105, one or more UEs 115, and a core network 130. In some examples, the wireless communications system 100 may be a Long Term Evolution (LTE) network, an LTE-Advanced (LTE-A) network, an LTE-A Pro network, or a New Radio (NR) network. In some examples, the wireless communications system 100 may support enhanced broadband communications, ultra-reliable (e.g., mission critical) communications, low latency communications, communications with low-cost and low-complexity devices, or any combination thereof.

The base stations 105 may be dispersed throughout a geographic area to form the wireless communications system 100 and may be devices in different forms or having different capabilities. The base stations 105 and the UEs 115 may wirelessly communicate via one or more communication links 125. Each base station 105 may provide a coverage area 110 over which the UEs 115 and the base station 105 may establish one or more communication links 125. The coverage area 110 may be an example of a geographic area over which a base station 105 and a UE 115 may support the communication of signals according to one or more radio access technologies.

The UEs 115 may be dispersed throughout a coverage area 110 of the wireless communications system 100, and each UE 115 may be stationary, or mobile, or both at different times. The UEs 115 may be devices in different forms or having different capabilities. Some example UEs 115 are illustrated in FIG. 1. The UEs 115 described herein may be able to communicate with various types of devices, such as other UEs 115, the base stations 105, or network equipment (e.g., core network nodes, relay devices, integrated access and backhaul (IAB) nodes, or other network equipment), as shown in FIG. 1.

The wireless communications system 100 may include one or more repeating devices (e.g., wireless repeaters). A wireless repeater may include functionality to repeat, extend, and redirect wireless signals transmitted within a wireless communications system. In some cases, wireless repeaters may be used in line of sight (LOS) or non-line of sight (NLOS) scenarios. In a LOS scenario, directional (e.g., beamformed) transmissions, such as mmW transmissions, may be limited by path-loss through air. In a NLOS scenario, such as in an urban area or indoors, mmW transmissions may be limited by signal blocking or signal interfering physical objects. In either scenario, a wireless repeater may be used to receive a signal from a base station 105 and transmit a signal to UE 115, or receive a signal from a UE 115 and transmit the signal to the base station 105. Beamforming, filtering, gain control, and phase correction techniques may be utilized by a wireless repeater to improve signal quality and avoid radio frequency interference with the transmitted signal.

The base stations 105 may communicate with the core network 130, or with one another, or both. For example, the base stations 105 may interface with the core network 130 through one or more backhaul links 120 (e.g., via an S1, N2, N3, or other interface). The base stations 105 may communicate with one another over the backhaul links 120 (e.g., via an X2, Xn, or other interface) either directly (e.g., directly between base stations 105), or indirectly (e.g., via core network 130), or both. In some examples, the backhaul links 120 may be or include one or more wireless links.

One or more of the base stations 105 described herein may include or may be referred to by a person having ordinary skill in the art as a base transceiver station, a radio base station, an access point, a radio transceiver, a NodeB, an eNodeB (eNB), a nextgeneration NodeB or a giga-NodeB (either of which may be referred to as a gNB), a Home NodeB, a Home eNodeB, or other suitable terminology.

A UE 115 may include or may be referred to as a mobile device, a wireless device, a remote device, a handheld device, or a subscriber device, or some other suitable terminology, where the "device" may also be referred to as a unit, a station, a terminal, or a client, among other examples. A UE 115 may also include or may be referred to as a personal electronic device such as a cellular phone, a personal digital assistant (PDA), a tablet computer, a laptop computer, or a personal computer. In some examples, a UE 115 may include or be referred to as a wireless local loop (WLL) station, an Internet of Things (IoT) device, an Internet of Everything (IoE) device, or a machine type communications (MTC) device, among other examples, which may be implemented in various objects such as appliances, or vehicles, meters, among other examples. In some examples, a UE 115 may be an example of a drone or UAV.

The UEs 115 described herein may be able to communicate with various types of devices, such as other UEs 115 that may sometimes act as relays as well as the base stations 105 and the network equipment including macro eNBs or gNBs, small cell eNBs or gNBs, or relay base stations, among other examples, as shown in FIG. 1.

The UEs 115 and the base stations 105 may wirelessly communicate with one another via one or more communication links 125 over one or more carriers. The term "carrier" may refer to a set of radio frequency spectrum resources having a defined physical layer structure for supporting the communication links 125. For example, a carrier used for a communication link 125 may include a portion of a radio frequency spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system 100 may support communication with a UE 115 using carrier aggregation or multi-carrier operation. A UE 115 may be configured with multiple downlink component carriers and one or more uplink component carriers according to a carrier aggregation configuration. Carrier aggregation may be used with both frequency division duplexing (FDD) and time division duplexing (TDD) component carriers.

In some examples (e.g., in a carrier aggregation configuration), a carrier may also have acquisition signaling or control signaling that coordinates operations for other carriers. A carrier may be associated with a frequency channel (e.g., an evolved universal mobile telecommunication system terrestrial radio access (E-UTRA) absolute radio frequency channel number (EARFCN)) and may be positioned according to a channel raster for discovery by the UEs 115. A carrier may be operated in a standalone mode where initial acquisition and connection may be conducted by the UEs 115 via the carrier, or the carrier may be operated in a non-standalone mode where a connection is anchored using a different carrier (e.g., of the same or a different radio access technology).

The communication links 125 shown in the wireless communications system 100 may include uplink transmissions from a UE 115 to a base station 105, or downlink transmissions from a base station 105 to a UE 115. Carriers may carry downlink or uplink communications (e.g., in an FDD mode) or may be configured to carry downlink and uplink communications (e.g., in a TDD mode).

A carrier may be associated with a particular bandwidth of the radio frequency spectrum, and in some examples the carrier bandwidth may be referred to as a "system bandwidth" of the carrier or the wireless communications system 100. For example, the carrier bandwidth may be one of a number of determined bandwidths for carriers of a particular radio access technology (e.g., 1.4, 3, 5, 10, 15, 20, 40, or 80 megahertz (MHz)). Devices of the wireless communications system 100 (e.g., the base stations 105, the UEs 115, or both) may have hardware configurations that support communications over a particular carrier bandwidth or may be configurable to support communications over one of a set of carrier bandwidths. In some examples, the wireless communications system 100 may include base stations 105 or UEs 115 that support simultaneous communications via carriers associated with multiple carrier bandwidths. In some examples, each served UE 115 may be configured for operating over portions (e.g., a sub-band, a BWP) or all of a carrier bandwidth.

Signal waveforms transmitted over a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may consist of one symbol period (e.g., a duration of one modulation symbol) and one subcarrier, where the symbol period and subcarrier spacing are inversely related. The number of bits carried by each resource element may depend on the modulation scheme (e.g., the order of the modulation scheme, the coding rate of the modulation scheme, or both). Thus, the more resource elements that a UE 115 receives and the higher the order of the modulation scheme, the higher the data rate may be for the UE 115. A wireless communications resource may refer to a combination of a radio frequency spectrum resource, a time resource, and a spatial resource (e.g., spatial layers or beams), and the use of multiple spatial layers may further increase the data rate or data integrity for communications with a UE 115.

One or more numerologies for a carrier may be supported, where a numerology may include a subcarrier spacing (Δ*f*) and a cyclic prefix. A carrier may be divided into one or more BWPs having the same or different numerologies. In some examples, a UE 115 may be configured with multiple BWPs. In some examples, a single BWP for a carrier may be active at a given time and communications for the UE 115 may be restricted to one or more active BWPs.

The time intervals for the base stations 105 or the UEs 115 may be expressed in multiples of a basic time unit which may, for example, refer to a sampling period of *Tₛ =* 1/(Δ*fₘₐₓ · N_{f}*) seconds, where Δ*fₘₐₓ* may represent the maximum supported subcarrier spacing, and *N_{f}* may represent the maximum supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively numbered subframes or slots, and each subframe or slot may have the same duration. In some examples, a frame may be divided (e.g., in the time domain) into subframes, and each subframe may be further divided into a number of slots. Alternatively, each frame may include a variable number of slots, and the number of slots may depend on subcarrier spacing. Each slot may include a number of symbol periods (e.g., depending on the length of the cyclic prefix prepended to each symbol period). In some wireless communications systems 100, a slot may further be divided into multiple mini-slots containing one or more symbols. Excluding the cyclic prefix, each symbol period may contain one or more (e.g., *N_{f}*) sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., the number of symbol periods in a TTI) may be variable. Additionally or alternatively, the smallest scheduling unit of the wireless communications system 100 may be dynamically selected (e.g., in bursts of shortened TTIs (sTTIs)).

Physical channels may be multiplexed on a carrier according to various techniques. A physical control channel and a physical data channel may be multiplexed on a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a number of symbol periods and may extend across the system bandwidth or a subset of the system bandwidth of the carrier. One or more control regions (e.g., CORESETs) may be configured for a set of the UEs 115. For example, one or more of the UEs 115 may monitor or search control regions for control information according to one or more search space sets, and each search space set may include one or multiple control channel candidates in one or more aggregation levels arranged in a cascaded manner. An aggregation level for a control channel candidate may refer to a number of control channel resources (e.g., control channel elements (CCEs)) associated with encoded information for a control information format having a given payload size. Search space sets may include common search space sets configured for sending control information to multiple UEs 115 and UE-specific search space sets for sending control information to a specific UE 115.

Each base station 105 may provide communication coverage via one or more cells, for example a macro cell, a small cell, a hot spot, or other types of cells, or any combination thereof. The term "cell" may refer to a logical communication entity used for communication with a base station 105 (e.g., over a carrier) and may be associated with an identifier for distinguishing neighboring cells (e.g., a physical cell identifier (PCID), a virtual cell identifier (VCID), or others). In some examples, a cell may also refer to a geographic coverage area 110 or a portion of a geographic coverage area 110 (e.g., a sector) over which the logical communication entity operates. Such cells may range from smaller areas (e.g., a structure, a subset of structure) to larger areas depending on various factors such as the capabilities of the base station 105. For example, a cell may be or include a building, a subset of a building, or exterior spaces between or overlapping with geographic coverage areas 110, among other examples.

A macro cell generally covers a relatively large geographic area (e.g., several kilometers in radius) and may allow unrestricted access by the UEs 115 with service subscriptions with the network provider supporting the macro cell. A small cell may be associated with a lower-powered base station 105, as compared with a macro cell, and a small cell may operate in the same or different (e.g., licensed, unlicensed) frequency bands as macro cells. Small cells may provide unrestricted access to the UEs 115 with service subscriptions with the network provider or may provide restricted access to the UEs 115 having an association with the small cell (e.g., the UEs 115 in a closed subscriber group (CSG), the UEs 115 associated with users in a home or office). A base station 105 may support one or multiple cells and may also support communications over the one or more cells using one or multiple component carriers. In some examples, a carrier may support multiple cells, and different cells may be configured according to different protocol types (e.g., MTC, narrowband IoT (NB-IoT), enhanced mobile broadband (eMBB)) that may provide access for different types of devices.

In some examples, a base station 105 may be movable and therefore provide communication coverage for a moving geographic coverage area 110. In some examples, different geographic coverage areas 110 associated with different technologies may overlap, but the different geographic coverage areas 110 may be supported by the same base station 105. In other examples, the overlapping geographic coverage areas 110 associated with different technologies may be supported by different base stations 105. The wireless communications system 100 may include, for example, a heterogeneous network in which different types of the base stations 105 provide coverage for various geographic coverage areas 110 using the same or different radio access technologies.

The wireless communications system 100 may support synchronous or asynchronous operation. For synchronous operation, the base stations 105 may have similar frame timings, and transmissions from different base stations 105 may be approximately aligned in time. For asynchronous operation, the base stations 105 may have different frame timings, and transmissions from different base stations 105 may, in some examples, not be aligned in time. The techniques described herein may be used for either synchronous or asynchronous operations.

Some UEs 115, such as MTC or IoT devices, may be low cost or low complexity devices and may provide for automated communication between machines (e.g., via Machine-to-Machine (M2M) communication). M2M communication or MTC may refer to data communication technologies that allow devices to communicate with one another or a base station 105 without human intervention. In some examples, M2M communication or MTC may include communications from devices that integrate sensors or meters to measure or capture information and relay such information to a central server or application program that makes use of the information or presents the information to humans interacting with the application program. Some UEs 115 may be designed to collect information or enable automated behavior of machines or other devices. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transactionbased business charging.

Some UEs 115 may be configured to employ operating modes that reduce power consumption, such as half-duplex communications (e.g., a mode that supports one-way communication via transmission or reception, but not transmission and reception simultaneously). In some examples, half-duplex communications may be performed at a reduced peak rate. Other power conservation techniques for the UEs 115 include entering a power saving deep sleep mode when not engaging in active communications, operating over a limited bandwidth (e.g., according to narrowband communications), or a combination of these techniques. For example, some UEs 115 may be configured for operation using a narrowband protocol type that is associated with a defined portion or range (e.g., set of subcarriers or resource blocks (RBs)) within a carrier, within a guard-band of a carrier, or outside of a carrier.

The wireless communications system 100 may be configured to support ultra-reliable communications or low-latency communications, or various combinations thereof. For example, the wireless communications system 100 may be configured to support ultra-reliable low-latency communications (URLLC) or mission critical communications. The UEs 115 may be designed to support ultra-reliable, low-latency, or critical functions (e.g., mission critical functions). Ultra-reliable communications may include private communication or group communication and may be supported by one or more mission critical services such as mission critical push-to-talk (MCPTT), mission critical video (MCVideo), or mission critical data (MCData). Support for mission critical functions may include prioritization of services, and mission critical services may be used for public safety or general commercial applications. The terms ultra-reliable, low-latency, mission critical, and ultra-reliable low-latency may be used interchangeably herein.

In some examples, a UE 115 may also be able to communicate directly with other UEs 115 over a device-to-device (D2D) communication link 135 (e.g., using a peer-to-peer (P2P) or D2D protocol). One or more UEs 115 utilizing D2D communications may be within the geographic coverage area 110 of a base station 105. Other UEs 115 in such a group may be outside the geographic coverage area 110 of a base station 105 or be otherwise unable to receive transmissions from a base station 105. In some examples, groups of the UEs 115 communicating via D2D communications may utilize a one-to-many (1:M) system in which each UE 115 transmits to every other UE 115 in the group. In some examples, a base station 105 facilitates the scheduling of resources for D2D communications. In other cases, D2D communications are carried out between the UEs 115 without the involvement of a base station 105.

In some systems, the D2D communication link 135 may be an example of a communication channel, such as a sidelink communication channel, between vehicles (e.g., UEs 115). In some examples, vehicles may communicate using vehicle-to-everything (V2X) communications, vehicle-to-vehicle (V2V) communications, or some combination of these. A vehicle may signal information related to traffic conditions, signal scheduling, weather, safety, emergencies, or any other information relevant to a V2X system. In some examples, vehicles in a V2X system may communicate with roadside infrastructure, such as roadside units, or with the network via one or more network nodes (e.g., base stations 105) using vehicle-to-network (V2N) communications, or with both.

The core network 130 may provide user authentication, access authorization, tracking, Internet Protocol (IP) connectivity, and other access, routing, or mobility functions. The core network 130 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage NAS functions such as mobility, authentication, and bearer management for the UEs 115 served by the base stations 105 associated with the core network 130. User IP packets may be transferred through the user plane entity, which may provide IP address allocation as well as other functions. The user plane entity may be connected to the network operators IP services 150. The operators IP services 150 may include access to the Internet, Intranet(s), an IP Multimedia Subsystem (IMS), or a Packet-Switched Streaming Service.

Some of the network devices, such as a base station 105, may include subcomponents such as an access network entity 140, which may be an example of an access node controller (ANC). Each access network entity 140 may communicate with the UEs 115 through one or more other access network transmission entities 145, which may be referred to as radio heads, smart radio heads, or transmission/reception points (TRPs). Each access network transmission entity 145 may include one or more antenna panels. In some configurations, various functions of each access network entity 140 or base station 105 may be distributed across various network devices (e.g., radio heads and ANCs) or consolidated into a single network device (e.g., a base station 105).

The wireless communications system 100 may operate using one or more frequency bands, for example, in the range of 300 megahertz (MHz) to 300 gigahertz (GHz). Generally, the region from 300 MHz to 3 GHz is known as the ultra-high frequency (UHF) region or decimeter band because the wavelengths range from approximately one decimeter to one meter in length. The UHF waves may be blocked or redirected by buildings and environmental features, but the waves may penetrate structures sufficiently for a macro cell to provide service to the UEs 115 located indoors. The transmission of UHF waves may be associated with smaller antennas and shorter ranges (e.g., less than 100 kilometers) compared to transmission using the smaller frequencies and longer waves of the high frequency (HF) or very high frequency (VHF) portion of the spectrum below 300 MHz.

The wireless communications system 100 may also operate in a super high frequency (SHF) region using frequency bands from 3 GHz to 30 GHz, also known as the centimeter band, or in an extremely high frequency (EHF) region of the spectrum (e.g., from 30 GHz to 300 GHz), also known as the millimeter band. In some examples, the wireless communications system 100 may support millimeter wave (mmW) communications between the UEs 115 and the base stations 105, and EHF antennas of the respective devices may be smaller and more closely spaced than UHF antennas. In some examples, this may facilitate use of antenna arrays within a device. The propagation of EHF transmissions, however, may be subject to even greater atmospheric attenuation and shorter range than SHF or UHF transmissions. The techniques disclosed herein may be employed across transmissions that use one or more different frequency regions, and designated use of bands across these frequency regions may differ by country or regulating body.

The wireless communications system 100 may utilize both licensed and unlicensed radio frequency spectrum bands. For example, the wireless communications system 100 may employ License Assisted Access (LAA), LTE-Unlicensed (LTE-U) radio access technology, or NR technology in an unlicensed band such as the 5 GHz industrial, scientific, and medical (ISM) band. When operating in unlicensed radio frequency spectrum bands, devices such as the base stations 105 and the UEs 115 may employ carrier sensing for collision detection and avoidance. In some examples, operations in unlicensed bands may be based on a carrier aggregation configuration in conjunction with component carriers operating in a licensed band (e.g., LAA). Operations in unlicensed spectrum may include downlink transmissions, uplink transmissions, P2P transmissions, or D2D transmissions, among other examples.

A base station 105 or a UE 115 may be equipped with multiple antennas, which may be used to employ techniques such as transmit diversity, receive diversity, multiple-input multiple-output (MIMO) communications, or beamforming. The antennas of a base station 105 or a UE 115 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations. Additionally or alternatively, an antenna panel may support radio frequency beamforming for a signal transmitted via an antenna port.

The base stations 105 or the UEs 115 may use MIMO communications to exploit multipath signal propagation and increase the spectral efficiency by transmitting or receiving multiple signals via different spatial layers. Such techniques may be referred to as spatial multiplexing. The multiple signals may, for example, be transmitted by the transmitting device via different antennas or different combinations of antennas. Likewise, the multiple signals may be received by the receiving device via different antennas or different combinations of antennas. Each of the multiple signals may be referred to as a separate spatial stream and may carry bits associated with the same data stream (e.g., the same codeword) or different data streams (e.g., different codewords). Different spatial layers may be associated with different antenna ports used for channel measurement and reporting. MIMO techniques include single-user MIMO (SU-MIMO), where multiple spatial layers are transmitted to the same receiving device, and multiple-user MIMO (MU-MIMO), where multiple spatial layers are transmitted to multiple devices.

Beamforming, which may also be referred to as spatial filtering, directional transmission, or directional reception, is a signal processing technique that may be used at a transmitting device or a receiving device (e.g., a base station 105, a UE 115) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating at particular orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with a particular orientation (e.g., with respect to the antenna array of the transmitting device or receiving device, or with respect to some other orientation).

A base station 105 or a UE 115 may use beam sweeping techniques as part of beam forming operations. For example, a base station 105 may use multiple antennas or antenna arrays (e.g., antenna panels) to conduct beamforming operations for directional communications with a UE 115. Some signals (e.g., synchronization signals, reference signals, beam selection signals, or other control signals) may be transmitted by a base station 105 multiple times in different directions. For example, the base station 105 may transmit a signal according to different beamforming weight sets associated with different directions of transmission. Transmissions in different beam directions may be used to identify (e.g., by a transmitting device, such as a base station 105, or by a receiving device, such as a UE 115) a beam direction for later transmission or reception by the base station 105.

Some signals, such as data signals associated with a particular receiving device, may be transmitted by a base station 105 in a single beam direction (e.g., a direction associated with the receiving device, such as a UE 115). In some examples, the beam direction associated with transmissions along a single beam direction may be determined based on a signal that was transmitted in one or more beam directions. For example, a UE 115 may receive one or more of the signals transmitted by the base station 105 in different directions and may report to the base station 105 an indication of the signal that the UE 115 received with a highest signal quality or an otherwise acceptable signal quality.

In some examples, transmissions by a device (e.g., by a base station 105 or a UE 115) may be performed using multiple beam directions, and the device may use a combination of digital precoding or radio frequency beamforming to generate a combined beam for transmission (e.g., from a base station 105 to a UE 115). The UE 115 may report feedback that indicates precoding weights for one or more beam directions, and the feedback may correspond to a configured number of beams across a system bandwidth or one or more sub-bands. The base station 105 may transmit a reference signal (e.g., a cell-specific reference signal (CRS), a channel state information reference signal (CSI-RS)), which may be precoded or unprecoded. The UE 115 may provide feedback for beam selection, which may be a precoding matrix indicator (PMI) or codebook-based feedback (e.g., a multi-panel type codebook, a linear combination type codebook, a port selection type codebook). Although these techniques are described with reference to signals transmitted in one or more directions by a base station 105, a UE 115 may employ similar techniques for transmitting signals multiple times in different directions (e.g., for identifying a beam direction for subsequent transmission or reception by the UE 115) or for transmitting a signal in a single direction (e.g., for transmitting data to a receiving device).

A receiving device (e.g., a UE 115) may try multiple receive configurations (e.g., directional listening) when receiving various signals from the base station 105, such as synchronization signals, reference signals, beam selection signals, or other control signals. For example, a receiving device may try multiple receive directions by receiving via different antenna subarrays, by processing received signals according to different antenna subarrays, by receiving according to different receive beamforming weight sets (e.g., different directional listening weight sets) applied to signals received at multiple antenna elements of an antenna array, or by processing received signals according to different receive beamforming weight sets applied to signals received at multiple antenna elements of an antenna array, any of which may be referred to as "listening" according to different receive configurations or receive directions. In some examples, a receiving device may use a single receive configuration to receive along a single beam direction (e.g., when receiving a data signal). The single receive configuration may be aligned in a beam direction determined based on listening according to different receive configuration directions (e.g., a beam direction determined to have a highest signal strength, highest signal-to-noise ratio (SNR), or otherwise acceptable signal quality based on listening according to multiple beam directions).

The wireless communications system 100 may be a packet-based network that operates according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use error detection techniques, error correction techniques, or both to support retransmissions at the MAC layer to improve link efficiency. In the control plane, the Radio Resource Control (RRC) protocol layer may provide establishment, configuration, and maintenance of an RRC connection between a UE 115 and a base station 105 or a core network 130 supporting radio bearers for user plane data. At the physical layer, transport channels may be mapped to physical channels.

The UEs 115 and the base stations 105 may support retransmissions of data to increase the likelihood that data is received successfully. Hybrid automatic repeat request (HARQ) feedback is one technique for increasing the likelihood that data is received correctly over a communication link 125. HARQ may include a combination of error detection (e.g., using a cyclic redundancy check (CRC)), forward error correction (FEC), and retransmission (e.g., automatic repeat request (ARQ)). HARQ may improve throughput at the MAC layer in poor radio conditions (e.g., low signal-to-noise conditions). In some examples, a device may support same-slot HARQ feedback, where the device may provide HARQ feedback in a specific slot for data received in a previous symbol in the slot. In other cases, the device may provide HARQ feedback in a subsequent slot, or according to some other time interval.

In cases where one or more UEs 115 in the wireless communications system 100 are drones or UAVs, there may be various needs for UAV traffic management. In particular, drones or UASs may fundamentally change aviation, and regulatory bodies (FAA, European Union Aviation Safety Agency (EASA), etc.) may fully integrate drones or UASs into national airspace systems. Here, safety and security may be high-priority aspects of such systems, and the use of techniques, such as remote identification of the FAA and U-Space of EASA, may affect integration efforts. In some examples, UAS remote identification includes an ability of a UAS in flight to provide identification information that can be received by other parties. Remote identification may help facilitate advanced operations for UASs and provide the groundwork for UAS traffic management (UTM). Further, remote identification may assist regulatory agencies, flight control agencies, law enforcement (e.g., where a ground control system is a federal bureau of investigation (FBI) or police terminal), and Federal security agencies when a UAS appears to be flying in an unsafe manner or where the drone is not allowed to fly. In addition, remote identification may extend the operating environment for drones in one or more areas (e.g., in critical areas).

As UAV operation becomes more and more ubiquitous (e.g., for commercial and private operation), various countries and regions may begin to implement aspects that provide structure for UAV security management. For example, in the United States a service supplier, such as a USS or UFSS, may be certified by the FAA. Each service supplier may take responsibility for exchanging data and coordinating with other service suppliers. As such, the wireless communications system 100 may support the coexistence of UAVs and service suppliers through signaling provided by a terrestrial cellular network. For example, a UAV or drone, which may be an example of a UE 115, may be assigned one or more IDs (e.g., remote IDs) for communicating with the service supplier or broadcasting information to surrounding devices (e.g., in a BRID message). The BRID message may include various parameters or indications associated with the UAV and used by other devices to detect and learn information about the UAV (e.g., including the UAV's location, ID, flight information, and the like). However, the IDs assigned to the UAV may be falsified, presenting an oversight in security. For example, the information, such as location information, in fraudulent IDs for a UAV may impact operations of the UAV. In some cases, fraudulent IDs may cause one or more UAVs to stop, reverse, land, or maneuver according to corresponding fraudulent location information in the IDs. Such a security breach may be referred to as a denial of service (DoS) attack, and may result in inefficient operation of the UAV as well as loss or damage of property.

In such cases, a network entity in wireless communications system 100, such as a UDM entity associated with a core network 130, may coordinate with a UE 115 associated with a UAV or the USS to deliver a security configuration to the UAV for communications with a service supplier. For example, the UE 115 associated with the UAV may receive security credentials from a network entity (e.g., from the UDM entity via an AMF) associated with a core network 130 to enable secure communications with a service supplier (e.g., a UFSS, a USS, or both). For example, the UDM entity may generate and assign the security credentials corresponding to a security configuration to the UAV. In some cases, the UDM entity may deliver the security configuration to the UE 115 associated with the UAV (e.g., via the AMF) using a parameters update message (e.g., a NAS transport message). The UDM entity may update the UAV with the parameters by delivering protected UDM update data via national airspace system signaling (e.g., via the NAS transport message based on operator policies). In some cases, the UAV may perform a security check on received UDM update data. The UDM entity may transmit the generated security credentials to the service supplier to enable the communications between the service suppler and the UE 115 and UAV.

Additionally or alternatively, the service supplier (e.g., the UFSS, the USS, or both) may generate the security credentials. For example, the UE 115 associated with the UAV may send a registration request to the service supplier. Using a GPSI (e.g., or a different type of identifier for the UE or UAV) provided by the UE in the registration request, the service supplier may determine the UE associated with the UAV may not have a security configuration and may provide the security configuration to the UDM entity to push to the UE 115 (e.g., via the AMF). In some cases, the UE 115 associated with the UAV may receive one or more IDs (e.g., remote IDs) for operations over a carrier. In some cases, the one or more IDs may correspond to a BRID, a NRID, or both for communications between the carrier and the service supplier. The one or more IDs may be protected by the security configuration.

It is noted that, while some aspects of the disclosure are described with relation to remote identification and USS implementations, which may be associated with aspects implemented by the FAA in the United States, the same or similar techniques may also apply to other flight management systems utilized in other regions or countries. That is, the techniques described herein should not be considered as being limited to remote identification or the FAA, and such techniques may be applicable to other systems and functions that provide UAS flight management. For instance, the described techniques may be utilized in the U-space system in Europe, among other examples.

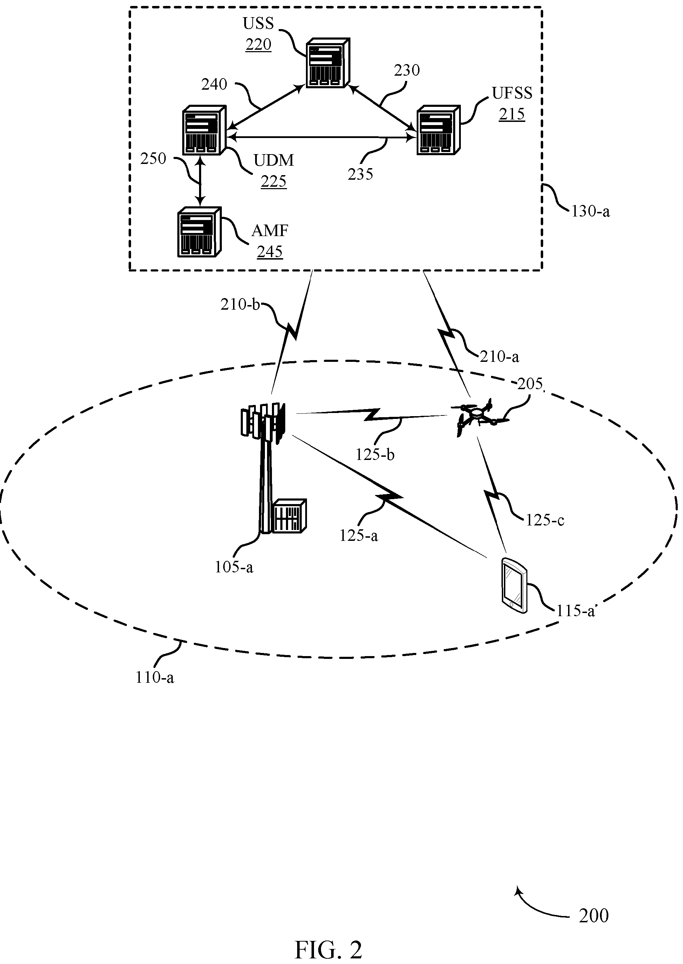

**FIG.** 2 illustrates an example of a wireless communications system 200 that supports techniques for providing security credentials to UAVs in accordance with aspects of the present disclosure. In some examples, the wireless communications system 200 may implement aspects of wireless communications system 100. For example, wireless communications system 200 may include a base station 105-a with a coverage area 110-a, a UE 115-a, and a core network 130-a, which may be examples of a base station 105, UEs 115, and a core network 130, respectively, as described with reference to FIG. 1. Wireless communications system 100 may include one or more UAVs 205 (e.g., drones). In some cases, a UAV 205 may be an example of a UE 115 as described with reference to FIG. 1. Base station 105-a and UE 115-a may communicate via a communication link 125-a, base station 105-a and UAV 205 may communicate via a communications link 125-b, and UAV 205 and UE 115-a may communicate via a communications link 125-c, which may be examples of a communication link 125 as described with reference to FIG. 1. Although a base station 105 is shown for illustrative purposes, UE 115-a may communicate with various wireless devices, such as another UE 115, a repeater device, or other wireless devices.

Although one UAV 205 is shown, wireless communications system 200 may include any number of UAVs 205. In some cases, a UE 115 may be an example of an alternative communication device, such as a cellular device. For example, UE 115-a may be an example of a cellular device. Base station 105-a, UE 115-a, and UAV 205 may exchange information (e.g., via the communication links 125, sidelink communication, or both).

The UAV 205 may be a part of a UAS. The UAS may include a UAV controller and one or more UAVs 205, where each of the one or more UAVs 205 may be connected with or in communication with each other, using wireless communications technologies. In some cases, a UAV controller may be configured to issue functions and commands (e.g., navigation, geo-fencing, detection, monitoring, identification, flight planning) to a UAV 205 and to receive data (e.g., telemetry) from the UAV 205. Additionally or alternatively, the UAV controller may be coupled with a communication device (e.g., UE 115-a) that may be used to communicate with a wireless network as described with reference to FIG. 1 (e.g., with core network 130-a, such as via base station 105-a) to relay information to and from UAV 205. In some cases, the communication device (e.g., UE 115-a) may also be used to control or operate UAV 205. In other examples, the UAV controller may be connected to a wireless network (e.g., a 3rd generate partnership project (3GPP) mobile network), connected to the Internet, or both. Additionally or alternatively, the UAV controller may not be connected to the mobile network and may utilize, for example, a command and control (C2) interface.

In some cases, a UAV 205 may transmit or receive information from the core network 130-a via a core network link 210-a. Base station 105-a may transmit or receive information between core network 130-a and the UAV 205, UE 115-a, or both via a core network link 210-b. Core network 130-a may include a UFSS 215, a USS 220, or both, which may communicate with each other via link 230. For example, UFSS 215 and USS 220 may exchange information regarding the UAV 205. Additionally or alternatively, UFSS 215, USS 220, or both may communicate with a UDM entity 225 via link 235 and link 240, respectively. In some examples, UDM entity 225 may exchange additional information regarding the UAV 205. In some cases, each UAV 205 of the UAS may exchange application data traffic with the USS 220. Core network 130-a may also include an AMF 245, which may act as an intermediary between UDM entity 225 and base station 105-a, the UAV 205, UE 115-a, or a combination thereof. For example, AMF 245 and UDM entity 225 may communicate through a link 250 to transmit messages between UDM entity 225 and base station 105-a, the UAV 205, UE 115-a, or a combination thereof.

A UAV 205 may be assigned one or more IDs, such as a BRID or a NRID, which are both examples of remote IDs. Remote IDs may enable public and civil identification of UASs for safety, security, and compliance purposes. For instance, a remote ID may increase UAV operation accountability by generating UAV identification information while preserving operation and personal privacy for UAV operators and associates (e.g., companies implementing UAVs 205 and their customers). A remote ID may include multiple information parameters related to the movement of the UAV 205 (location, direction vector, latitude, longitude, speed, direction, altitude, etc.), information about the accuracy of the movement parameters, or both.

For example, a remote ID may include various data fields corresponding to information associated with the UAV 205. In some examples, the identification information may include a UAS ID (e.g., or UAV ID), which may further include a serial number (e.g., when no registration ID exists, which may be expressed in an ANSI/CTA-2063 Physical Serial Number format), a registration number (e.g., a number provided by a civil aviation authority (CAA) or its authorized representative), or a UAV traffic management (UTM) assigned ID (UUID) (e.g., a UTM-provided unique ID that may be traceable to a registration ID and may act as a "session ID" to protect exposure of operationally sensitive information). In some cases, the parameters associated with the UAV 205 may include a UAV type (such as fixed wing, quad rotor, etc., which may differentiate between different aircraft types), a timestamp (e.g., a time of applicability of a dynamic message, which may be based on a time source, such as via Global Positioning System (GPS), or a time when the message was computed), a timestamp accuracy (e.g., a declaration of timestamp accuracy within a time period), operation status of the UAV 205 (e.g., on the ground or in the air), operation description (e.g., an explanation of the reason for the presence of the UAV 205), or any combination thereof. Further, the parameters may include fields that provide for location, direction, and movement information of the UAV 205. The various parameters may further include operator information (e.g., operator location, operator identity), group information (e.g., in cases of multiple UAV 205 operating in a swarm or formation), and security or authentication token information.

In some examples, the one or more IDs assigned to the UAV 205 may enable the UAV 205 to communicate with core network 130-a. However, the IDs assigned to the UAV 205 may be falsified, presenting an oversight in security. For example, fraudulent IDs for a UAV 205 in the UAS may impact operations of the UAV 205. In some cases, fraudulent IDs may cause one or more UAVs 205 in the UAS to stop, reverse, land, or maneuver according to corresponding fraudulent location information in the IDs. Such a security breach may be referred to as a denial of service (DoS) attack and may result in inefficient operation of the UAV 205 as well as loss or damage of property.

As described herein, a UAV 205 may receive security credentials (e.g., indirectly from the UDM entity 225 via a NAS transport message transmitted by AMF 245) to enable secure communications with the UFSS 215, the USS 220, other network devices, or a combination. For example, the UDM entity 225 may generate and assign the security credentials corresponding to a security configuration to the UAV 205. In some cases, the UDM entity 225 may deliver the security configuration (e.g., via AMF 245) to a mobile entity (ME) in the UAV 205 (e.g., hardware of the UAV) using a parameters update message via a UDM control plane procedure. For example, UDM entity 225 may generate and store one or more parameters associated with the UAV 205. In some cases, the parameters may include updated default configured network slice assistance information (NSSAI), updated routing indicator data, an updated ME security configuration, or a combination. The UDM entity 225 may update the UAV 205 with the parameters by delivering protected UDM update data to AMF 245 via a notification message, and AMF 245 may transmit a NAS transport message (e.g., based on operator policies) to the UAV 205 carrying the security configuration generated by the UDM entity 225. In some examples, the UDM update data may include the one or more parameters, an acknowledgement request indication, a reregistration request indication, or a combination. In some cases, the UAV 205 may perform a security check on received UDM update data. If the UDM update data passes the security check, the UAV 205 may update the routing indicator data, the default configured NSSAI data, the ME security configuration, or a combination based on the UDM update data. The UDM entity 225 may transmit the generated security credentials to the service supplier (e.g., the UFSS 215, USS 220, or both) to enable the communications between the service suppler and the UAV 205.

Additionally or alternatively, the service supplier (e.g., the UFSS 215, the USS 220, or both) may generate the security credentials for communications with the UAV 205. In some examples, the UAV 205 may send a registration request to the UFSS 215 or the USS 220. Accordingly, the UFSS 215 or the USS 220 may determine the UAV 205 may not have a security configuration and may provide the security configuration (e.g., based on a GPSI provided by the UAV 205 in the registration request) to the UDM entity 225 to be pushed to the ME (e.g., via AMF 245). In some cases, wireless communications system 200, which may be a wireless communication system that operates according to 3GPP mobile network standards, may provide the UAV 205 with one or more IDs (e.g., remote IDs) for operations over a carrier. In some cases, the one or more IDs may be used for a BRID, a NRID, communications between the carrier and the USS 220. The one or more IDs may be protected by the security configuration. After receiving the security credentials, the UAV 205 may replace stored security configurations (e.g., previously used security credentials) with a security configuration corresponding to the received security credentials.

In some cases, the security configuration may include a UAV certificate, security keys (e.g., private keys, public keys, or both), the ID or address of the UFSS 215, or a combination thereof. The UAV certificate may be used for communications between the UAV 205 and the UFSS 215, the USS 220, or both. The security keys may be used to protect ID information sent by the UAV 205. Additionally or alternatively, the keys may be used for verifying BRID information that the UAV 205 receives from other UAVs 205.

After receiving the security credentials (e.g., as assigned by the UDM entity 225 or by the UFSS 215 or the USS 220 as described herein), the UAV 205 may determine whether the security credentials are successfully received. For example, if the UAV 205 determines the security credentials are successfully received and decoded, the UAV 205 may transmit a positive acknowledgment message to the UDM entity 225 (e.g., via the AMF 245), and the UDM entity 225 may forward this positive acknowledgment to the UFSS 215 or the USS 220, where the security credentials are then applied for subsequent communications between the UAV 205 and the UFSS 215, the USS 220, or both.

In some cases, the UAV 205 may transmit this positive acknowledgement message in an uplink NAS transport message (e.g., in a payload container information element, such as a payload type information element for a UE parameters update transparent container). After receiving a downlink NAS transport message for updating parameters if the UAV 205 (e.g., the downlink NAS transport message includes a UE parameter update list that further includes a UE parameters update data set with a UE parameters update data set type indicating a security configuration for the ME of the UAV 205), the UAV 205 may determine whether to transmit the acknowledgment message. For example, the UAV 205 may transmit the positive acknowledgment message based on an acknowledgment bit received with the security credentials (e.g., an acknowledgment bit of a UE parameters update header in a UE parameters update transparent container) that indicates for the UAV 205 to transmit acknowledgment feedback (e.g., the acknowledgment is requested) and based on the information included in the downlink NAS transport message not being indicated for data to update a routing indicator. The ME of the UAV 205 replace any stored security configurations with the security configuration included in the downlink NAS transport message. Subsequently, after transmitting the positive acknowledgment message, the UAV 205 and the UFSS 215, the USS 220, or both may communicate securely.

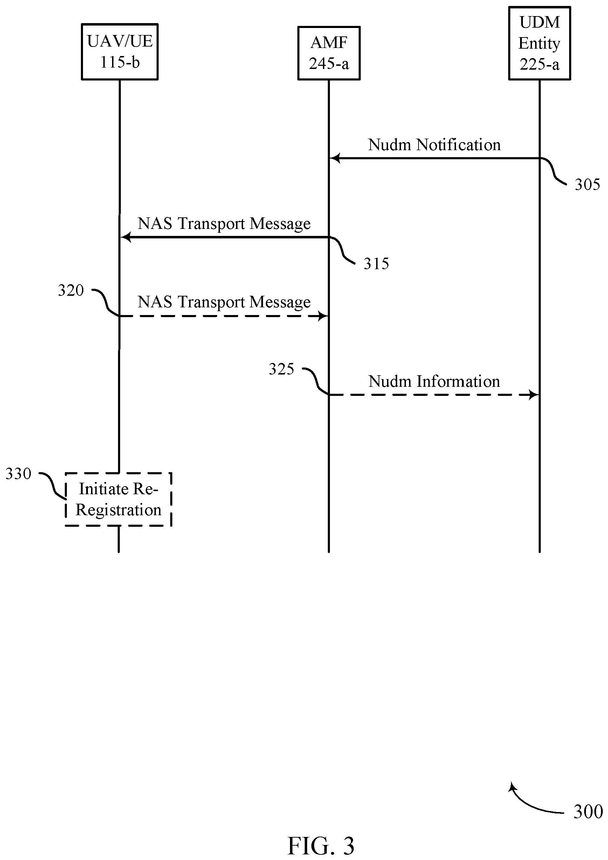

**FIG. 3** illustrates an example of a process flow 300 in a system that supports techniques for providing security credentials to a UAV in accordance with aspects of the present disclosure. In some examples, process flow 300 may implement aspects of wireless communications system 100 and wireless communications system 200. The process flow 300 may include a UAV or UE 115-b, an AMF 245-a, and a UDM entity 225-a, which may be examples of corresponding devices as described with reference to FIGs. 1 and 2. In some cases, as described with reference to FIG. 2, a UAV or a UE 115, such as UAV/UE 115-b, may attempt to communicate with an service supplier, such as a UFSS, a USS, or both, where a security configuration is generated by UDM entity 225-a or the UFSS or USS for the communications between the UAV/UE 115-b and the UFSS or USS. Subsequently, the UDM entity 225-a may transmit an indication of this security configuration to the UAV/UE 115-b, via the AMF 245-a.

At 305, the UDM entity 225-a may notify changes of information related to UAV/UE 115-b to an affected AMF 245-a by a subscriber data management (SDM) message using a service-based interface for UDM entity 225-a, where the service-based interface for UDM entity 225-a is indicated by Nudm (e.g., a Nudm_SDM_Notification service operation). This Nudm notification (e.g., Nudm_SDM_Notification service operation) may contain updated data for UAV/UE 115-b, such as the generated security configuration. For example, the Nudm notification may indicate a UDM update data operation ("Routing Indicator update data," "Default Configured NSSAI update data," "ME Security Configuration," etc.) that may be delivered transparently to UAV/UE 115-b over NAS within access and mobility subscription data (e.g., via AMF 245-a). The UDM update data may include updated parameters to be delivered to UAV/UE 115-b (updated Routing Indicator Data, a Default Configured NSSAI, the ME Security Configuration, etc.), whether UAV/UE 115-b sends an acknowledgment message to UDM entity 225-a, whether UAV/UE 115-b reregisters after updating the data, or a combination thereof.

At 310, AMF 245-a may send a downlink NAS transport message to UAV/UE 115-b (e.g., a served UE). AMF 245-a may include in the downlink NAS transport message a transparent container received from UDM entity 225-a. In some cases, UAV/UE 115-b may verify that the UDM update data is provided by a Home Public Land Mobile Network (HPLMN). If the security check on the UDM update data is successful (e.g., the information is verified), UAV/UE 115-b may either store the information and use those parameters from that point onwards or may forward the information to a subscriber identity module (SIM) (e.g., a universal mobile telecommunications system SIM (USIM). Alternatively, if the security check on the UDM update data fails, UAV/UE 115-b may discard the contents of the UDM update data.

At 315, if UAV/UE 115-b has verified that the UDM update data is provided by the HPLMN and UDM entity 225-a has requested UAV/UE 115-b to send an acknowledgment message to UDM entity 225-a (e.g., as described with reference to FIG. 2), UAV/UE 115-b may send an uplink NAS transport message to AMF 245-a (e.g., the serving AMF 245) with a transparent container including UAV/UE 115-b acknowledgement.

At 320, if AMF 245-a receives an uplink NAS transport message with a transparent container carrying a UE acknowledgement from UAV/UE 115-b, AMF 245-a may send a Nudm information message (e.g., Nudm_SDM_Info request message) including the transparent container to UDM entity 225-a carrying the UE acknowledgement from UAV/UE 115-b.

At 325, if UDM entity 225-a has requested UAV/UE 115-b to re-register, UAV/UE 115-b may wait until going back to an RRC idle state and may initiate a registration procedure.

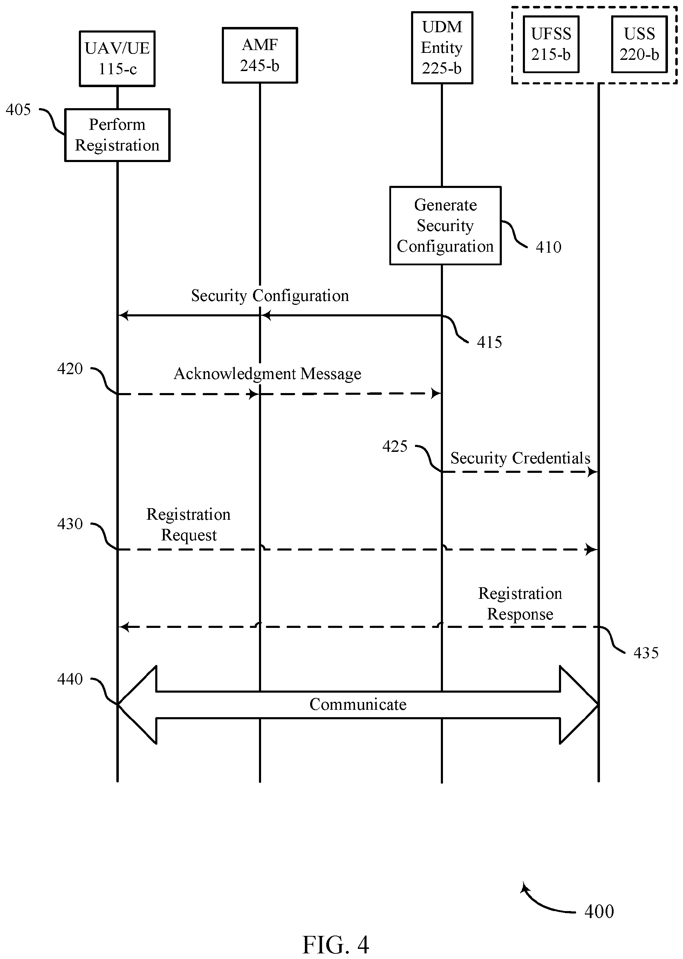

**FIG. 4** illustrates an example of a process flow 400 in a system that supports techniques for providing security credentials to a UAV in accordance with aspects of the present disclosure. In some examples, the process flow 400 may implement aspects of wireless communications system 100, wireless communications system 200, and process flow 300. The process flow 400 may illustrate an example of a communications procedure between a UAV or UE 115, such as UAV/UE 115-c, and a service supplier such as UFSS 215-b or USS 220-b using a security configuration from UDM entity 225-b signaled by AMF 245-b. Alternative examples of the following may be implemented, where some processes are performed in a different order than described or are not performed at all. In some cases, processes may include additional features not mentioned below, or further processes may be added. In some cases, UAV/UE 115-c may be a UE 115 (e.g., as described with reference to FIG. 1) associated with a UAV in a terrestrial cellular network.

At 405, UAV/UE 115-c may perform a registration procedure with one or more network functions for communications with an unmanned aerial system service supplier, the one or more network functions including AMF 245-b. For example, UAV/UE 115-c may perform the registration procedure to establish a connection for communications with UFSS 215-b, USS 220-b, or both.

At 410, UDM entity 225-b may generate a security configuration for UAV/UE 115-c. The security configuration may include one or more security credentials to enable communications between UAV/UE 115-c and UFSS 215-b, USS 220-b, or both. In some cases, the security configuration may include a certificate for communications between UAV/UE 115-c and UFSS 215-b, USS 220-b, or both, private and public security keys to enable the communications, one or more security keys which UAV/UE 115-c may use for broadcasting a remote ID and verifying received remote IDs, an ID of the UFSS 215-b, USS 220-b, or both, or a combination thereof. For example, the security configuration (e.g., an ME security configuration) may contain security credentials (a certificate, associated keys, etc.) to be used by the ME of UAV/UE 115-c (i.e., the UAV and not a USIM of UAV/UE 115-c)

At 415, UDM entity 225-b may transmit the security configuration to UAV/UE 115-c (e.g., via AMF 245-b). In some cases, UDM entity 225-b may transmit the security configuration with the one or more security credentials in a NAS transport message. In some examples, UAV/UE 115-c may receive the security configuration based on a GPSI of UAV/UE 115-c. Additionally or alternatively, UAV/UE 115-c may receive the security configuration based on transmitting a registration request to UFSS 215-b, USS 220-b, or both. In some cases, UAV/UE 115-c may remove security credentials used for previous communications. UAV/UE 115-c may receive the security configuration at a hardware component of UAV/UE 115-c, such as an ME. In some cases, UDM entity 225-b may transit a UDM configuration update message including parameters for UAV/UE 115-c to AMF 245-b. The UDM configuration update message may indicate the security configuration.

In some cases, at 420, UAV/UE 115-c may send an acknowledgement message to UDM entity 225-b (e.g., via AMF 245-b) to confirm UAV/UE 115-c received the security configuration.

In some cases, at 425, UDM entity 225-b may transmit a message including the security credentials for UAV/UE 115-c to UFSS 215-b, USS 220-b, or both based on receiving the acknowledgment message at 420. The message may include an indication of the security configuration to enable the communication between UAV/UE 115-c and UFSS 215-b, USS 220-b, or both.

In some examples, at 430, UAV/UE 115-c may transmit the registration request to UFSS 215-b, USS 220-b, or both. The registration request may include registration information corresponding to UAV/UE 115-c. For example, the registration request may include the GPSI of UAV/UE 115-c. In some cases, UAV/UE 115-c may transmit the registration request based on an identity of the UFSS 215-b, the USS 220-b, or both, which UAV/UE 115-c may receive in the security configuration at 415. The registration request may be protected by the one or more security credentials in the security configuration from UDM entity 225-b. In some cases, UFSS 215-b, USS 220-b, or both may determine the one or more security credentials based on the registration request.

At 435, UFSS 215-b, USS 220-b, or both may send a registration response to UAV/UE 115-c based on receiving the registration request. In some cases, the registration response may include an identifier for UAV/UE 115-c.

At 440, UAV/UE 115-c may communicate with UFSS 215-b, USS 220-b, or both according to the one or more security credentials of the security configuration. In some cases, the communication may be based on UAV/UE 115-c transmitting the acknowledgement message at 420. Additionally or alternatively, the communication may be based on the identifier received in the registration response at 435 in conjunction with the security configuration.

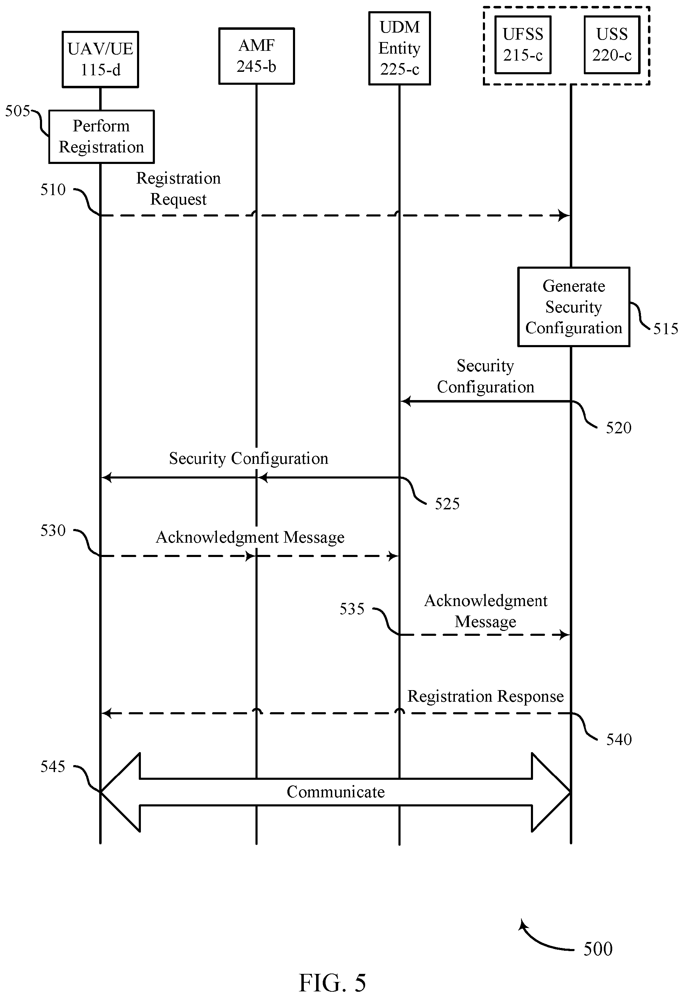

**FIG.** 5 illustrates an example of a process flow 500 in a system that supports techniques for providing security credentials to a UAV in accordance with aspects of the present disclosure. In some examples, the process flow 500 may implement aspects of wireless communications systems 100 or wireless communications system 200. The process flow 500 may include aspects of process flow 300 and process flow 400. For example, the process flow 500 may illustrate an example of a communications procedure between a UAV or UE 115, such as UAV/UE 115-d, and a service supplier, such as UFSS 215-c or USS 220-c, using a security configuration from UDM entity 225-c signaled by AMF 245-c. Alternative examples of the following may be implemented, where some processes are performed in a different order than described or are not performed at all. In some cases, processes may include additional features not mentioned below, or further processes may be added. In some cases, UAV/UE 115-d may be a UE 115 (e.g., as described with reference to FIG. 1) associated with a UAV in a terrestrial cellular network.

At 505, UAV/UE 115-d may perform a registration procedure with one or more network functions for communications with a service supplier (e.g., a UFSS 215 or a USS 220), the one or more network functions including AMF 245-c. For example, UAV/UE 115-d may perform the registration procedure to establish a connection for communications with UFSS 215-c, USS 220-c, or both.

In some examples, at 510, UAV/UE 115-d may transmit a registration request to UFSS 215-c, USS 220-c, or both. The registration request may include registration information corresponding to UAV/UE 115-d. For example, the registration request may include a GPSI of UAV/UE 115-c. In some cases, UFSS 215-c, USS 220-c, or both may determine the one or more security credentials based on the registration request.

At 515, UFSS 215-c, USS 220-c, or both may generate a security configuration for UAV/UE 115-d. The security configuration may include one or more security credentials to enable communications between UAV/UE 115-d and UFSS 215-c, USS 220-c, or both. In some cases, the security configuration may include a certificate for communications between UAV/UE 115-d and UFSS 215-c, USS 220-c, or both, private and public security keys to enable the communications, one or more security keys which UAV/UE 115-d may use for broadcasting a remote ID and verifying received remote IDs, an ID of the UFSS 215-c, USS 220-c, or both, or a combination thereof. In some cases, UFSS 215-c, USS 220-c, or both may generate the security configuration based on UAV/UE 115-d registering to a network including UDM entity 225-c and AMF 245-b or UAV/UE 115-d. In some other cases, UFSS 215-c, USS 220-c, or both may generate the security configuration based on no security configuration being previously delivered to UAV/UE 115-d; a security refreshing for UAV/UE 115-d; a trigger received from UFSS 215-c, USS 220-c, or both; or a combination thereof.

At 520, UFSS 215-c, USS 220-c, or both may transmit the security configuration to UDM entity 225-c. For example, UFSS 215-c, USS 220-c, or both may transmit an indication of the security configuration to UDM entity 225-c via a UDM services message, a network exposure function update message, or both. At 525, UDM entity 225-c may transmit the security configuration to UAV/UE 115-d (e.g., via AMF 245-c) based on receiving the security configuration at 520. In some cases, UDM entity 225-b may transmit the security configuration with the one or more security credentials in a national airspace system message. In some examples, UAV/UE 115-d may receive the security configuration based on the GPSI of UAV/UE 115-d. Additionally or alternatively, UAV/UE 115-d may receive the security configuration based on transmitting the registration request to UFSS 215-c, USS 220-c, or both. In some cases, UAV/UE 115-d may remove security credentials used for previous communications. UAV/UE 115-d may receive the security configuration at a hardware component of UAV/UE 115-d, such as an ME. In some cases, UDM entity 225-c may transit a UDM configuration update message including parameters for UAV/UE 115-d to AMF 245-b. The UDM configuration update message may indicate the security configuration.

In some cases, at 530, UAV/UE 115-d may send an acknowledgement message to UDM entity 225-c (e.g., via AMF 245-c) to confirm UAV/UE 115-d received the security configuration. At 535, UDM entity 225-c may send an acknowledgement message to UFSS 215-c, USS 220-c, or both to confirm UAV/UE 115-d received the security configuration. For example, UDM entity 225-c may transmit a parameter provision information message including the acknowledgement message.

At 540, UFSS 215-c, USS 220-c, or both may send a registration response to UAV/UE 115-d based on receiving the acknowledgement message. In some cases, the registration response may include an identifier for UAV/UE 115-d.

At 545, UAV/UE 115-d may communicate with UFSS 215-c, USS 220-c, or both according to the one or more security credentials of the security configuration. In some cases, the communication may be based on UAV/UE 115-d transmitting the acknowledgement message at 530. Additionally or alternatively, the communication may be based on the identifier received in the registration response at 540 in conjunction with the security configuration.

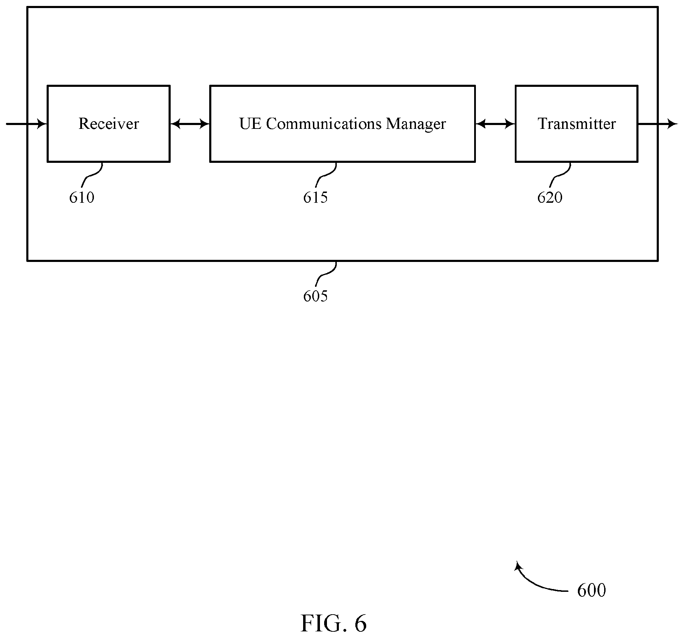

**FIG. 6** shows a block diagram 600 of a device 605 that supports providing security credentials to UAVs in accordance with aspects of the present disclosure. The device 605 may be an example of aspects of a UE 115 as described herein. The device 605 may include a receiver 610, a UE communications manager 615, and a transmitter 620. The device 605 may also include a processor. Each of these components may be in communication with one another (e.g., via one or more buses).

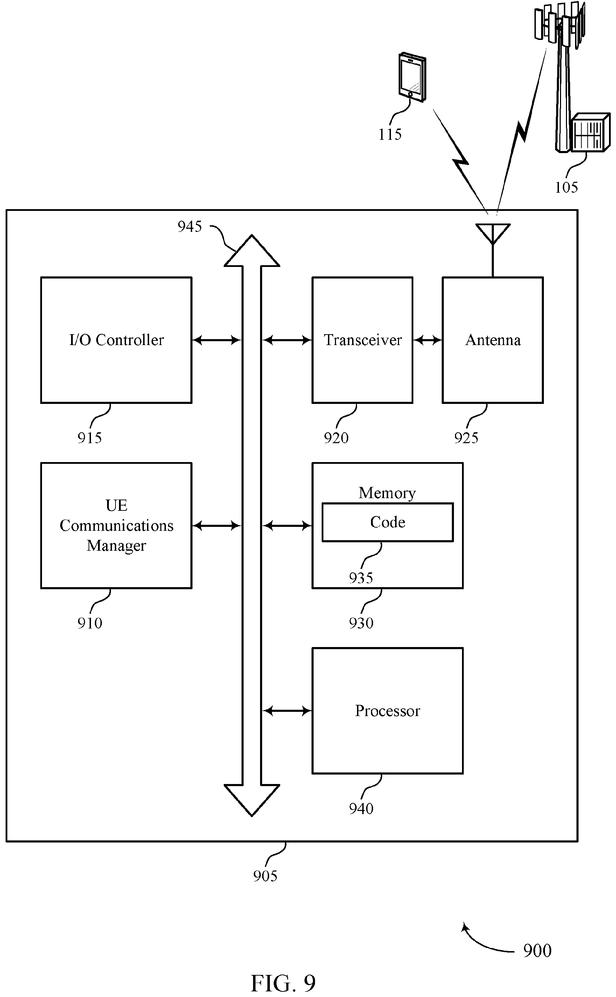

The receiver 610 may receive information such as packets, user data, or control information associated with various information channels (e.g., control channels, data channels, and information related to providing security credentials to UAVs, etc.). Information may be passed on to other components of the device 605. The receiver 610 may be an example of aspects of the transceiver 920 described with reference to FIG. 9. The receiver 610 may utilize a single antenna or a set of antennas.

The UE communications manager 615 may perform a registration procedure with one or more network functions for communications with an unmanned aerial system service supplier, the one or more network functions including an AMF. In some cases, the UE communications manager 615 may receive, from a UDM entity via the AMF, an indication of a security configuration in a non-access stratum transport message, the security configuration including one or more security credentials to enable communications between the UE and the unmanned aerial system service supplier. The UE communications manager 615 may then communicate with the unmanned aerial system service supplier based on the one or more security credentials of the security configuration. The UE communications manager 615 may be an example of aspects of the UE communications manager 910 described herein.

The actions performed by the UE communications manager 615 as described herein may be implemented to realize one or more potential advantages. One implementation may enable a UDM entity or a UFSS, USS, or both to transmit a security configuration to a UE associated with a UAV. Such configuration may enable techniques for secure communications between the UE and the UFSS, USS, or both based on security credentials, which may result in fewer DoS attacks or imposter attacks, among other advantages.

The UE communications manager 615, or its sub-components, may be implemented in hardware, code (e.g., software or firmware) executed by a processor, or any combination thereof. If implemented in code executed by a processor, the functions of the UE communications manager 615, or its sub-components may be executed by a general-purpose processor, a digital signal processor (DSP), an application-specific integrated circuit (ASIC), a field-programmable gate array (FPGA) or other programmable logic device, discrete gate or transistor logic, discrete hardware components, or any combination thereof designed to perform the functions described in the present disclosure.

The UE communications manager 615, or its sub-components, may be physically located at various positions, including being distributed such that portions of functions are implemented at different physical locations by one or more physical components. In some examples, the UE communications manager 615, or its sub-components, may be a separate and distinct component in accordance with various aspects of the present disclosure. In some examples, the UE communications manager 615, or its sub-components, may be combined with one or more other hardware components, including but not limited to an input/output (I/O) component, a transceiver, a network server, another computing device, one or more other components described in the present disclosure, or a combination thereof in accordance with various aspects of the present disclosure.

The transmitter 620 may transmit signals generated by other components of the device 605. In some examples, the transmitter 620 may be collocated with a receiver 610 in a transceiver module. For example, the transmitter 620 may be an example of aspects of the transceiver 920 described with reference to FIG. 9. The transmitter 620 may utilize a single antenna or a set of antennas.

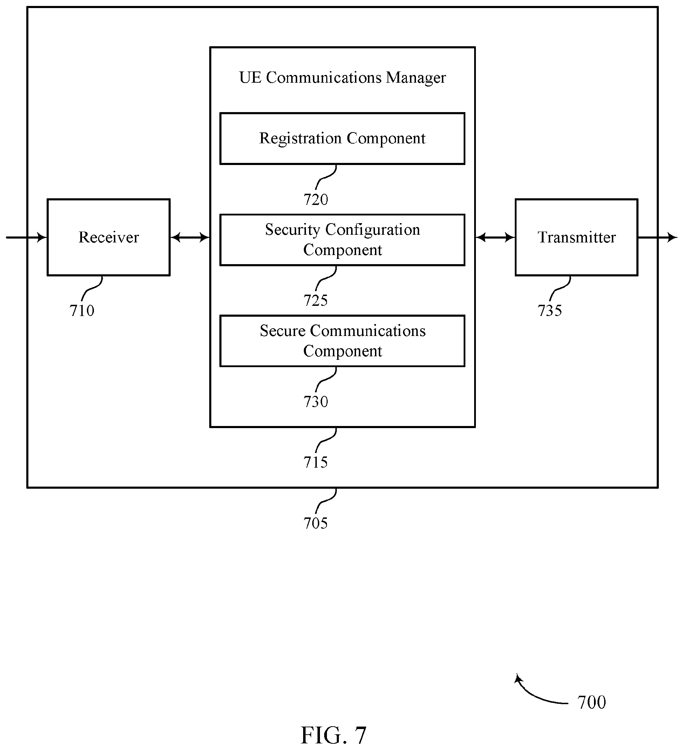

**FIG. 7** shows a block diagram 700 of a device 705 that supports providing security credentials to UAVs in accordance with aspects of the present disclosure. The device 705 may be an example of aspects of a device 605, or a UE 115 as described herein. The device 705 may include a receiver 710, a UE communications manager 715, and a transmitter 735. The device 705 may also include a processor. Each of these components may be in communication with one another (e.g., via one or more buses).

The receiver 710 may receive information such as packets, user data, or control information associated with various information channels (e.g., control channels, data channels, and information related to providing security credentials to UAVs, etc.). Information may be passed on to other components of the device 705. The receiver 710 may be an example of aspects of the transceiver 920 described with reference to FIG. 9. The receiver 710 may utilize a single antenna or a set of antennas.

The UE communications manager 715 may be an example of aspects of the UE communications manager 615 as described herein. The UE communications manager 715 may include a registration component 720, a security configuration component 725, and a secure communications component 730. The UE communications manager 715 may be an example of aspects of the UE communications manager 910 described herein.

The registration component 720 may perform a registration procedure with one or more network functions for communications with an unmanned aerial system service supplier, the one or more network functions including an AMF.

The security configuration component 725 may receive, from a UDM entity via the AMF, an indication of a security configuration in a non-access stratum transport message, the security configuration including one or more security credentials to enable communications between the UE and the unmanned aerial system service supplier.

The secure communications component 730 may communicate with the unmanned aerial system service supplier based on the one or more security credentials of the security configuration.

Based on implementing the configuration as described herein, a processor of a UE (e.g., a processor controlling the receiver 710, the UE communications manager 715, the transmitter 735, a transceiver 920 described with reference to FIG. 9, or a combination thereof) may reduce the impact or likelihood of loss or damage of property associated with the UAV while ensuring relatively efficient communications. For example, the configuring techniques described herein may leverage a UDM entity to generate the security configuration as well as the UFSS, USS, or both, which may realize efficient operation, among other benefits.

The transmitter 735 may transmit signals generated by other components of the device 705. In some examples, the transmitter 735 may be collocated with a receiver 710 in a transceiver module. For example, the transmitter 735 may be an example of aspects of the transceiver 920 described with reference to FIG. 9. The transmitter 735 may utilize a single antenna or a set of antennas.

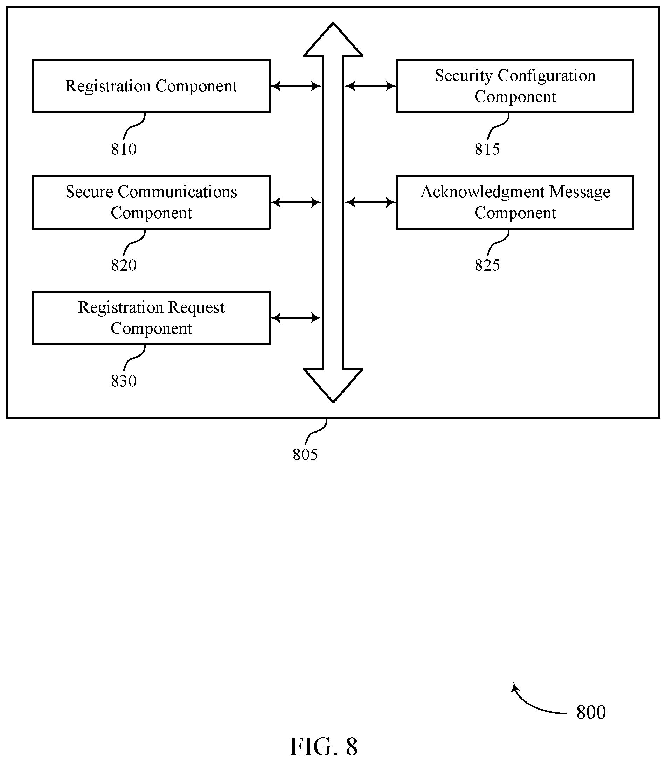

**FIG. 8** shows a block diagram 800 of a UE communications manager 805 that supports providing security credentials to UAVs in accordance with aspects of the present disclosure. The UE communications manager 805 may be an example of aspects of a UE communications manager 615, a UE communications manager 715, or a UE communications manager 910 described herein. The UE communications manager 805 may include a registration component 810, a security configuration component 815, a secure communications component 820, an acknowledgment message component 825, and a registration request component 830. Each of these modules may communicate, directly or indirectly, with one another (e.g., via one or more buses).

The registration component 810 may perform a registration procedure with one or more network functions for communications with an unmanned aerial system service supplier, the one or more network functions including an AMF.

The security configuration component 815 may receive, from a UDM entity via the AMF, an indication of a security configuration in a non-access stratum transport message, the security configuration including one or more security credentials to enable communications between the UE and the unmanned aerial system service supplier. In some cases, the indication of the security configuration may be received at a hardware component of the UE. Additionally, the security configuration may include a UE identity used for identifying the UE in the communications between the UE and the unmanned aerial system service supplier, a certificate for the communications between the UE and the unmanned aerial system service supplier, private and public security keys to enable the communications between the UE and the unmanned aerial system service supplier, one or more security keys to be used for by the UE for broadcasting a remote identifier of the UE and for verifying received remote identifiers broadcasted by additional UEs, an identifier of the unmanned aerial system service supplier, or a combination thereof. In some examples, the security configuration component 815 may determine to remove security credentials previously used by the UE for previous communications.

The secure communications component 820 may communicate with the unmanned aerial system service supplier based on the one or more security credentials of the security configuration.

The acknowledgment message component 825 may transmit, to the UDM entity, an acknowledgment message indicating that the UE successfully received the indication of the security configuration, where the communicating with the unmanned aerial system service supplier is based on the acknowledgment message.

The registration request component 830 may transmit, to the unmanned aerial system service supplier, a registration request for the communications between the UE and the unmanned aerial system service supplier, the registration request including registration information corresponding to the UE. In some examples, the registration request component 830 may determine to transmit the registration request to the unmanned aerial system service supplier based on an identity of the unmanned aerial system service supplier received in the indication of the security configuration. Additionally, the registration request component 830 may receive, from the unmanned aerial system service supplier, a registration response message in response to the registration request, the registration response message including an identifier for the UE, where the communicating with the unmanned aerial system service supplier is based on the identifier for the UE in conjuncture with the security configuration. In some cases, the registration request may be protected based on the one or more security credentials received from the UDM entity. Additionally, the indication of the security configuration may be received based on transmitting the registration request. In some cases, the registration request may include a GPSI of the UE, where the indication of the security configuration is received based on the GPSI of the UE.

**FIG. 9** shows a diagram of a system 900 including a device 905 that supports providing security credentials to UAVs in accordance with aspects of the present disclosure. The device 905 may be an example of or include the components of device 605, device 705, or a UE 115 as described herein. The device 905 may include components for bi-directional voice and data communications including components for transmitting and receiving communications, including a UE communications manager 910, an I/O controller 915, a transceiver 920, an antenna 925, memory 930, and a processor 940. These components may be in electronic communication via one or more buses (e.g., bus 945).

The UE communications manager 910 may perform a registration procedure with one or more network functions for communications with an unmanned aerial system service supplier, the one or more network functions including an AMF. In some cases, the UE communications manager 910 may receive, from a UDM entity via the AMF, an indication of a security configuration in a non-access stratum transport message, the security configuration including one or more security credentials to enable communications between the UE and the unmanned aerial system service supplier. The UE communications manager 910 may then communicate with the unmanned aerial system service supplier based on the one or more security credentials of the security configuration.

The I/O controller 915 may manage input and output signals for the device 905. The I/O controller 915 may also manage peripherals not integrated into the device 905. In some cases, the I/O controller 915 may represent a physical connection or port to an external peripheral. In some cases, the I/O controller 915 may utilize an operating system such as iOS^{®}, ANDROID^{®}, MS-DOS^{®}, MS-WINDOWS^{®}, OS/2^{®}, UNIX^{®}, LINUX^{®}, or another known operating system. In other cases, the I/O controller 915 may represent or interact with a modem, a keyboard, a mouse, a touchscreen, or a similar device. In some cases, the I/O controller 915 may be implemented as part of a processor. In some cases, a user may interact with the device 905 via the I/O controller 915 or via hardware components controlled by the I/O controller 915.

The transceiver 920 may communicate bi-directionally, via one or more antennas, wired, or wireless links as described above. For example, the transceiver 920 may represent a wireless transceiver and may communicate bi-directionally with another wireless transceiver. The transceiver 920 may also include a modem to modulate the packets and provide the modulated packets to the antennas for transmission, and to demodulate packets received from the antennas.

In some cases, the wireless device may include a single antenna 925. However, in some cases the device may have more than one antenna 925, which may be capable of concurrently transmitting or receiving multiple wireless transmissions.

The memory 930 may include random-access memory (RAM) and read-only memory (ROM). The memory 930 may store computer-readable, computer-executable code 935 including instructions that, when executed, cause the processor to perform various functions described herein. In some cases, the memory 930 may contain, among other things, a basic I/O system (BIOS) which may control basic hardware or software operation such as the interaction with peripheral components or devices.

The processor 940 may include an intelligent hardware device, (e.g., a general-purpose processor, a DSP, a central processing unit (CPU), a microcontroller, an ASIC, an FPGA, a programmable logic device, a discrete gate or transistor logic component, a discrete hardware component, or any combination thereof). In some cases, the processor 940 may be configured to operate a memory array using a memory controller. In other cases, a memory controller may be integrated into the processor 940. The processor 940 may be configured to execute computer-readable instructions stored in a memory (e.g., the memory 930) to cause the device 905 to perform various functions (e.g., functions or tasks supporting providing security credentials to UAVs).

The code 935 may include instructions to implement aspects of the present disclosure, including instructions to support wireless communications. The code 935 may be stored in a non-transitory computer-readable medium such as system memory or other type of memory. In some cases, the code 935 may not be directly executable by the processor 940 but may cause a computer (e.g., when compiled and executed) to perform functions described herein.

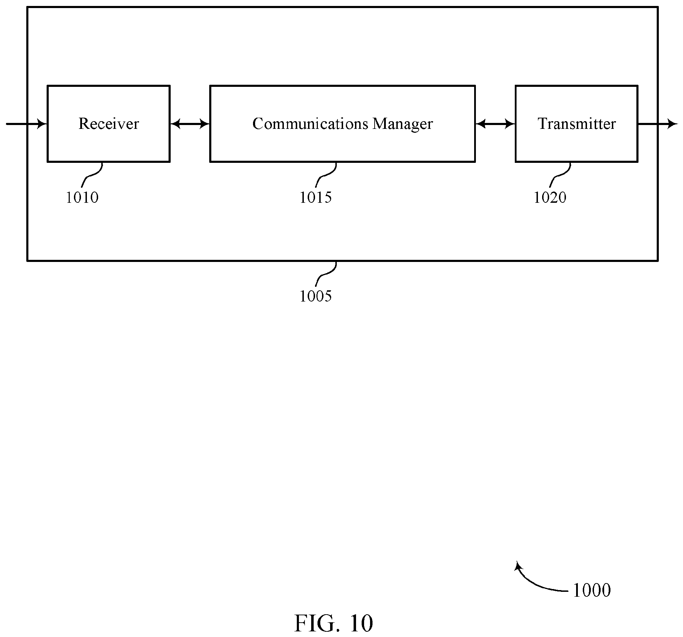

**FIG. 10** shows a block diagram 1000 of a device 1005 that supports providing security credentials to UAVs in accordance with aspects of the present disclosure. The device 1005 may be an example of aspects of a network entity as described herein. The device 1005 may include a receiver 1010, a communications manager 1015, and a transmitter 1020. The device 1005 may also include a processor. Each of these components may be in communication with one another (e.g., via one or more buses).

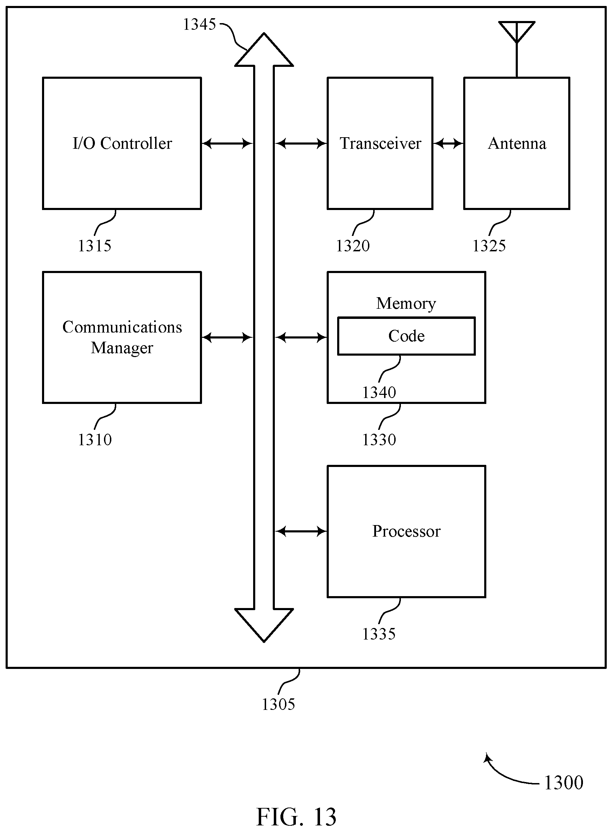

The receiver 1010 may receive information such as packets, user data, or control information associated with various information channels (e.g., control channels, data channels, and information related to providing security credentials to UAVs, etc.). Information may be passed on to other components of the device 1005. The receiver 1010 may be an example of aspects of the transceiver 1320 described with reference to FIG. 13. The receiver 1010 may utilize a single antenna or a set of antennas.

The communications manager 1015 may transmit, to an AMF, an indication of a security configuration, the security configuration including one or more security credentials to enable communications between a UE associated with an UAV and an unmanned aerial system service supplier. Additionally, the communications manager 1015 may receive, from the AMF, an acknowledgment message indicating that the UE successfully received the indication of the security configuration. In some cases, the communications manager 1015 may transmit, to the unmanned aerial system service supplier, a message based on receiving the acknowledgment message, the message indicating the one or more security credentials to be used by the UE for the communications with the unmanned aerial system service supplier.

Additionally or alternatively, the communications manager 1015 may receive, from a UE associated with an UAV, a registration request including registration information corresponding to the UE. In some cases, the communications manager 1015 may determine one or more security credentials to enable communications between the UE and the unmanned aerial system service supplier based on the registration request. Additionally, the communications manager 1015 may communicate with the UE based on the one or more security credentials. The communications manager 1015 may be an example of aspects of the communications manager 1310 described herein.

The communications manager 1015, or its sub-components, may be implemented in hardware, code (e.g., software or firmware) executed by a processor, or any combination thereof. If implemented in code executed by a processor, the functions of the communications manager 1015, or its sub-components may be executed by a general-purpose processor, a DSP, an ASIC, an FPGA or other programmable logic device, discrete gate or transistor logic, discrete hardware components, or any combination thereof designed to perform the functions described in the present disclosure.

The communications manager 1015, or its sub-components, may be physically located at various positions, including being distributed such that portions of functions are implemented at different physical locations by one or more physical components. In some examples, the communications manager 1015, or its sub-components, may be a separate and distinct component in accordance with various aspects of the present disclosure. In some examples, the communications manager 1015, or its sub-components, may be combined with one or more other hardware components, including but not limited to an I/O component, a transceiver, a network server, another computing device, one or more other components described in the present disclosure, or a combination thereof in accordance with various aspects of the present disclosure.

The transmitter 1020 may transmit signals generated by other components of the device 1005. In some examples, the transmitter 1020 may be collocated with a receiver 1010 in a transceiver module. For example, the transmitter 1020 may be an example of aspects of the transceiver 1320 described with reference to FIG. 13. The transmitter 1020 may utilize a single antenna or a set of antennas.

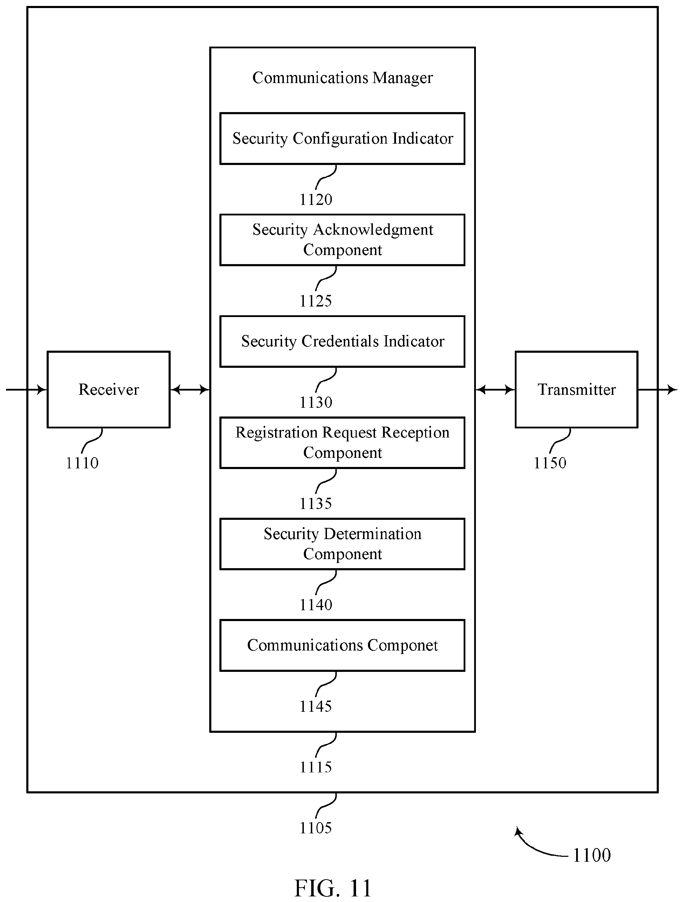

**FIG. 11** shows a block diagram 1100 of a device 1105 that supports providing security credentials to UAVs in accordance with aspects of the present disclosure. The device 1105 may be an example of aspects of a device 1005 or a network entity, such as a UE 115, as described herein. The device 1105 may include a receiver 1110, a communications manager 1115, and a transmitter 1150. The device 1105 may also include a processor. Each of these components may be in communication with one another (e.g., via one or more buses).

The receiver 1110 may receive information such as packets, user data, or control information associated with various information channels (e.g., control channels, data channels, and information related to providing security credentials to UAVs, etc.). Information may be passed on to other components of the device 1105. The receiver 1110 may be an example of aspects of the transceiver 1320 described with reference to FIG. 13. The receiver 1110 may utilize a single antenna or a set of antennas.

The communications manager 1115 may be an example of aspects of the communications manager 1015 as described herein. The communications manager 1115 may include a security configuration indicator 1120, a security acknowledgment component 1125, a security credentials indicator 1130, a registration request reception component 1135, a security determination component 1140, and a communications component 1145. The communications manager 1115 may be an example of aspects of the communications manager 1310 described herein.

The security configuration indicator 1120 may transmit, to an AMF, an indication of a security configuration, the security configuration including one or more security credentials to enable communications between a UE associated with an UAV and an unmanned aerial system service supplier.

The security acknowledgment component 1125 may receive, from the AMF, an acknowledgment message indicating that the UE successfully received the indication of the security configuration.

The security credentials indicator 1130 may transmit, to the unmanned aerial system service supplier, a message based on receiving the acknowledgment message, the message indicating the one or more security credentials to be used by the UE for the communications with the unmanned aerial system service supplier.

The registration request reception component 1135 may receive, from a UE associated with an UAV, a registration request including registration information corresponding to the UE.

The security determination component 1140 may determine one or more security credentials to enable communications between the UE and the unmanned aerial system service supplier based on the registration request.

The communications component 1145 may communicate with the UE based on the one or more security credentials.

The transmitter 1150 may transmit signals generated by other components of the device 1105. In some examples, the transmitter 1150 may be collocated with a receiver 1110 in a transceiver module. For example, the transmitter 1150 may be an example of aspects of the transceiver 1320 described with reference to FIG. 13. The transmitter 1150 may utilize a single antenna or a set of antennas.

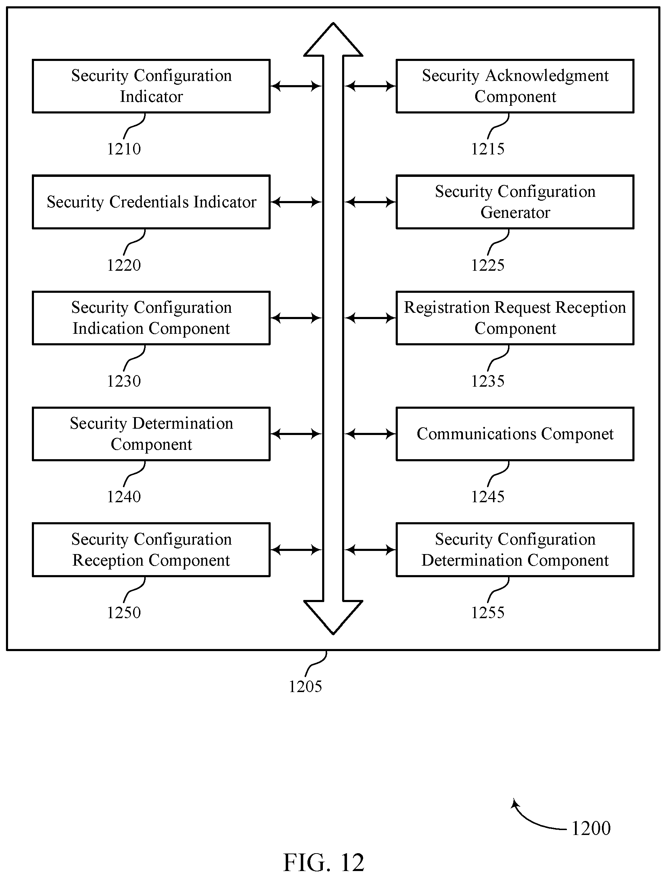

**FIG. 12** shows a block diagram 1200 of a communications manager 1205 that supports providing security credentials to UAVs in accordance with aspects of the present disclosure. The communications manager 1205 may be an example of aspects of a communications manager 1015, a communications manager 1115, or a communications manager 1310 described herein. The communications manager 1205 may include a security configuration indicator 1210, a security acknowledgment component 1215, a security credentials indicator 1220, a security configuration generator 1225, a security configuration indication component 1230, a registration request reception component 1235, a security determination component 1240, a communications component 1245, a security configuration reception component 1250, and a security configuration determination component 1255. Each of these modules may communicate, directly or indirectly, with one another (e.g., via one or more buses).

The security configuration indicator 1210 may transmit, to an AMF, an indication of a security configuration, the security configuration including one or more security credentials to enable communications between a UE associated with an UAV and an unmanned aerial system service supplier. In some examples, the security configuration indicator 1210 may transmit, to the AMF, a UDM configuration update message of parameters for the UE, where the UDM configuration update message includes the indication of the security configuration. In some cases, the security configuration may include a UE identity used for identifying the UE in the communications between the UE and the unmanned aerial system service supplier, a certificate for the communications between the UE and the unmanned aerial system service supplier, private and public security keys to enable the communications between the UE and the unmanned aerial system service supplier, one or more security keys to be used by the UE for broadcasting a remote identifier of a wireless device, such as the UE, and for verifying received remote identifiers broadcasted by additional UEs, an identifier of the unmanned aerial system service supplier, or a combination thereof.

The security acknowledgment component 1215 may receive, from the AMF, an acknowledgment message indicating that the UE successfully received the indication of the security configuration.

The security credentials indicator 1220 may transmit, to the unmanned aerial system service supplier, a message based on receiving the acknowledgment message, the message indicating the one or more security credentials to be used by the UE for the communications with the unmanned aerial system service supplier.

The registration request reception component 1235 may receive, from a UE associated with an UAV, a registration request including registration information corresponding to the UE.

The security determination component 1240 may determine one or more security credentials to enable communications between the UE and the unmanned aerial system service supplier based on the registration request. In some cases, the one or more security credentials may include a UE identity used for identifying the UE in the communications between the UE and the unmanned aerial system service supplier, a certificate for the communications between the UE and the unmanned aerial system service supplier, private and public security keys to enable the communications between the UE and the unmanned aerial system service supplier, one or more security keys to be used for by the UE for broadcasting a remote identifier of the UE and for verifying received remote identifiers broadcasted by additional UEs, an identifier of the unmanned aerial system service supplier, or a combination thereof.

The communications component 1245 may communicate with the UE based on the one or more security credentials.

The security configuration generator 1225 may generate the security configuration for the communications between the UE and the unmanned aerial system service supplier. In some examples, the security configuration generator 1225 may transmit, to the unmanned aerial system service supplier, the indication of the security configuration to enable the communications between the UE and the unmanned aerial system service supplier. In some cases, the security configuration may be generated based on the UE registering to a network including the UDM entity and the AMF, no security configuration being previously delivered to the UE, a security refreshing for the UE, a trigger received from the unmanned aerial system service supplier, or a combination thereof.

The security configuration indication component 1230 may receive, from the unmanned aerial system service supplier, the indication of the security configuration, where transmitting the indication of the security configuration to the AMF is based on receiving the indication of the security configuration from the unmanned aerial system service supplier. In some examples, the security configuration indication component 1230 may transmit, to the unmanned aerial system service supplier, a parameter provision information message including the acknowledgment message indicating that the UE successfully received the indication of the security configuration. Additionally, the security configuration indication component 1230 may receive, from the unmanned aerial system service supplier, the indication of the security configuration via a UDM services message, a network exposure function update message, or a combination thereof.

The security configuration reception component 1250 may receive, from a UDM entity, an indication of a security configuration, the security configuration including the one or more security credentials to enable the communications between the UE and the unmanned aerial system service supplier. In some cases, the security configuration may be generated by the UDM entity based on the UE registering to a network including the UDM entity, no security configuration being previously delivered to the UE, a security refreshing for the UE, a trigger received from the unmanned aerial system service supplier, or a combination thereof.

The security configuration determination component 1255 may generate a security configuration for the communications between the UE and the unmanned aerial system service supplier based on the registration information corresponding to the UE received in the registration request, the security configuration including the one or more security credentials. In some examples, the security configuration determination component 1255 may transmit, to a UDM entity, an indication of the security configuration. Additionally, the security configuration determination component 1255 may receive, from the UDM entity, a parameter provision information message including an acknowledgment message indicating that the UE successfully received the indication of the security configuration, where the communicating with the UE is based on the acknowledgment message. In some examples, the security configuration determination component 1255 may transmit, to the UDM entity, the indication of the security configuration via a UDM services message, a network exposure function update message, or a combination thereof. In some cases, the registration request may include a GPSI of the UE, where the one or more security credentials are generated based on the GPSI.

**FIG. 13** shows a diagram of a system 1300 including a device 1305 that supports providing security credentials to UAVs in accordance with aspects of the present disclosure. The device 1305 may be an example of or include the components of device 1005, device 1105, or a network entity as described herein. The device 1305 may include components for bi-directional voice and data communications including components for transmitting and receiving communications, including a communications manager 1310, an I/O controller 1315, a transceiver 1320, an antenna 1325, memory 1330, and a processor 1335. These components may be in electronic communication via one or more buses (e.g., bus 1345).

The communications manager 1310 may transmit, to an AMF, an indication of a security configuration, the security configuration including one or more security credentials to enable communications between a UE associated with an UAV and an unmanned aerial system service supplier. Additionally, the communications manager 1310 may receive, from the AMF, an acknowledgment message indicating that the UE successfully received the indication of the security configuration. In some cases, the communications manager 1310 may transmit, to the unmanned aerial system service supplier, a message based on receiving the acknowledgment message, the message indicating the one or more security credentials to be used by the UE for the communications with the unmanned aerial system service supplier.

Additionally or alternatively, the communications manager 1310 may receive, from a UE associated with an UAV, a registration request including registration information corresponding to the UE. In some cases, the communications manager 1310 may determine one or more security credentials to enable communications between the UE and the unmanned aerial system service supplier based on the registration request. Additionally, the communications manager 1310 may communicate with the UE based on the one or more security credentials.

The I/O controller 1315 may manage input and output signals for the device 1305. The I/O controller 1315 may also manage peripherals not integrated into the device 1305. In some cases, the I/O controller 1315 may represent a physical connection or port to an external peripheral. In some cases, the I/O controller 1315 may utilize an operating system such as iOS^{®}, ANDROID^{®}, MS-DOS^{®}, MS-WINDOWS^{®}, OS/2^{®}, UNIX^{®}, LINUX^{®}, or another known operating system. In other cases, the I/O controller 1315 may represent or interact with a modem, a keyboard, a mouse, a touchscreen, or a similar device. In some cases, the I/O controller 1315 may be implemented as part of a processor. In some cases, a user may interact with the device 1305 via the I/O controller 1315 or via hardware components controlled by the I/O controller 1315.

The transceiver 1320 may communicate bi-directionally, via one or more antennas, wired, or wireless links as described above. For example, the transceiver 1320 may represent a wireless transceiver and may communicate bi-directionally with another wireless transceiver. The transceiver 1320 may also include a modem to modulate the packets and provide the modulated packets to the antennas for transmission, and to demodulate packets received from the antennas.

In some cases, the wireless device may include a single antenna 1325. However, in some cases the device may have more than one antenna 1325, which may be capable of concurrently transmitting or receiving multiple wireless transmissions.

The memory 1330 may include RAM and ROM. The memory 1330 may store computer-readable, computer-executable code 1340 including instructions that, when executed, cause the processor to perform various functions described herein. In some cases, the memory 1330 may contain, among other things, a BIOS which may control basic hardware or software operation such as the interaction with peripheral components or devices.

The processor 1335 may include an intelligent hardware device, (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 1335 may be configured to operate a memory array using a memory controller. In other cases, a memory controller may be integrated into the processor 1335. The processor 1335 may be configured to execute computer-readable instructions stored in a memory (e.g., the memory 1330) to cause the device 1305 to perform various functions (e.g., functions or tasks supporting providing security credentials to UAVs).

The code 1340 may include instructions to implement aspects of the present disclosure, including instructions to support wireless communications. The code 1340 may be stored in a non-transitory computer-readable medium such as system memory or other type of memory. In some cases, the code 1340 may not be directly executable by the processor 1335 but may cause a computer (e.g., when compiled and executed) to perform functions described herein.

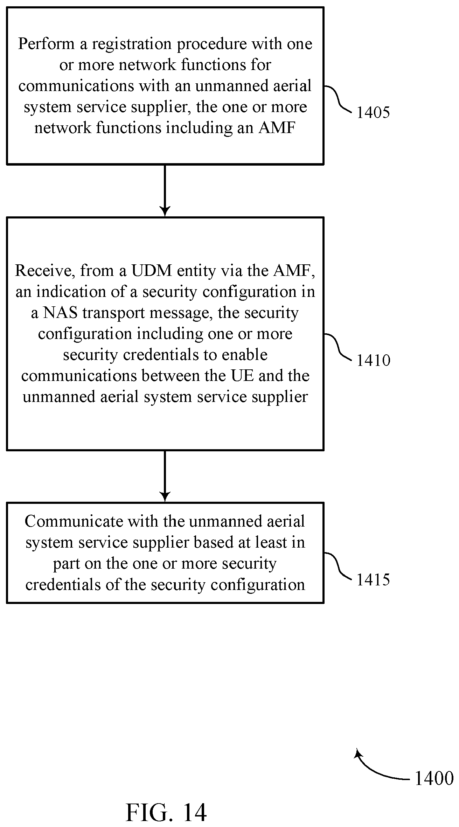

**FIG. 14** shows a flowchart illustrating a method 1400 that supports providing security credentials to UAVs in accordance with aspects of the present disclosure. The operations of method 1400 may be implemented by a UE 115 or its components as described herein. For example, the operations of method 1400 may be performed by a UE communications manager as described with reference to FIGs. 6 through 9. In some examples, a UE may execute a set of instructions to control the functional elements of the UE to perform the functions described below. Additionally or alternatively, a UE may perform aspects of the functions described below using special-purpose hardware.

At 1405, the UE may perform a registration procedure with one or more network functions for communications with an unmanned aerial system service supplier, the one or more network functions including an AMF. The operations of 1405 may be performed according to the methods described herein. In some examples, aspects of the operations of 1405 may be performed by a registration component as described with reference to FIGs. 6 through 9.

At 1410, the UE may receive, from a UDM entity via the AMF, an indication of a security configuration in a non-access stratum transport message, the security configuration including one or more security credentials to enable communications between the UE and the unmanned aerial system service supplier. The operations of 1410 may be performed according to the methods described herein. In some examples, aspects of the operations of 1410 may be performed by a security configuration component as described with reference to FIGs. 6 through 9.

At 1415, the UE may communicate with the unmanned aerial system service supplier based at least in part on the one or more security credentials of the security configuration. The operations of 1415 may be performed according to the methods described herein. In some examples, aspects of the operations of 1415 may be performed by a secure communications component as described with reference to FIGs. 6 through 9.

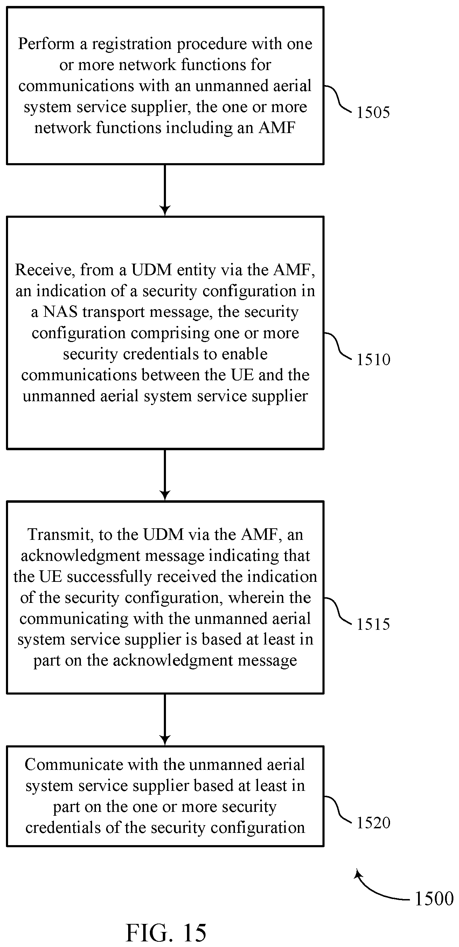

**FIG. 15** shows a flowchart illustrating a method 1500 that supports providing security credentials to UAVs in accordance with aspects of the present disclosure. The operations of method 1500 may be implemented by a UE 115 or its components as described herein. For example, the operations of method 1500 may be performed by a UE communications manager as described with reference to FIGs. 6 through 9. In some examples, a UE may execute a set of instructions to control the functional elements of the UE to perform the functions described below. Additionally or alternatively, a UE may perform aspects of the functions described below using special-purpose hardware.

At 1505, the UE may perform a registration procedure with one or more network functions for communications with an unmanned aerial system service supplier, the one or more network functions including an AMF. The operations of 1505 may be performed according to the methods described herein. In some examples, aspects of the operations of 1505 may be performed by a registration component as described with reference to FIGs. 6 through 9.

At 1510, the UE may receive, from a UDM entity via the AMF, an indication of a security configuration in a non-access stratum transport message, the security configuration including one or more security credentials to enable communications between the UE and the unmanned aerial system service supplier. The operations of 1510 may be performed according to the methods described herein. In some examples, aspects of the operations of 1510 may be performed by a security configuration component as described with reference to FIGs. 6 through 9.

At 1515, the UE may transmit, to the UDM entity, an acknowledgment message indicating that the UE successfully received the indication of the security configuration, where the communicating with the unmanned aerial system service supplier is based at least in part on the acknowledgment message. The operations of 1515 may be performed according to the methods described herein. In some examples, aspects of the operations of 1515 may be performed by an acknowledgment message component as described with reference to FIGs. 6 through 9.

At 1520, the UE may communicate with the unmanned aerial system service supplier based at least in part on the one or more security credentials of the security configuration. The operations of 1520 may be performed according to the methods described herein. In some examples, aspects of the operations of 1520 may be performed by a secure communications component as described with reference to FIGs. 6 through 9.

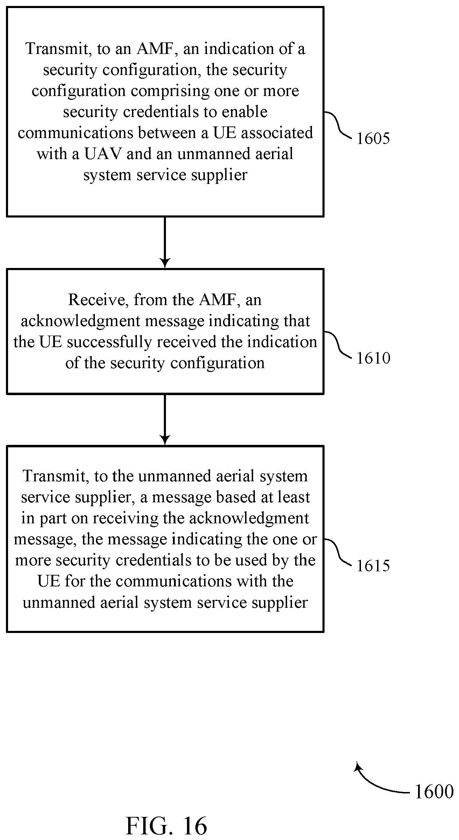

**FIG. 16** shows a flowchart illustrating a method 1600 that supports providing security credentials to UAVs in accordance with aspects of the present disclosure. The operations of method 1600 may be implemented by a network entity or its components as described herein (e.g., a UDM entity). For example, the operations of method 1600 may be performed by a communications manager as described with reference to FIGs. 10 through 13. In some examples, a network entity may execute a set of instructions to control the functional elements of the network entity to perform the functions described below. Additionally or alternatively, a network entity may perform aspects of the functions described below using special-purpose hardware.

At 1605, the network entity may transmit, to an AMF, an indication of a security configuration, the security configuration including one or more security credentials to enable communications between a UE associated with an UAV and an unmanned aerial system service supplier. The operations of 1605 may be performed according to the methods described herein. In some examples, aspects of the operations of 1605 may be performed by a security configuration indicator as described with reference to FIGs. 10 through 13.

At 1610, the network entity may receive, from the AMF, an acknowledgment message indicating that the UE successfully received the indication of the security configuration. The operations of 1610 may be performed according to the methods described herein. In some examples, aspects of the operations of 1610 may be performed by a security acknowledgment component as described with reference to FIGs. 10 through 13.

At 1615, the network entity may transmit, to the unmanned aerial system service supplier, a message based at least in part on receiving the acknowledgment message, the message indicating the one or more security credentials to be used by the UE for the communications with the unmanned aerial system service supplier. The operations of 1615 may be performed according to the methods described herein. In some examples, aspects of the operations of 1615 may be performed by a security credentials indicator as described with reference to FIGs. 10 through 13.

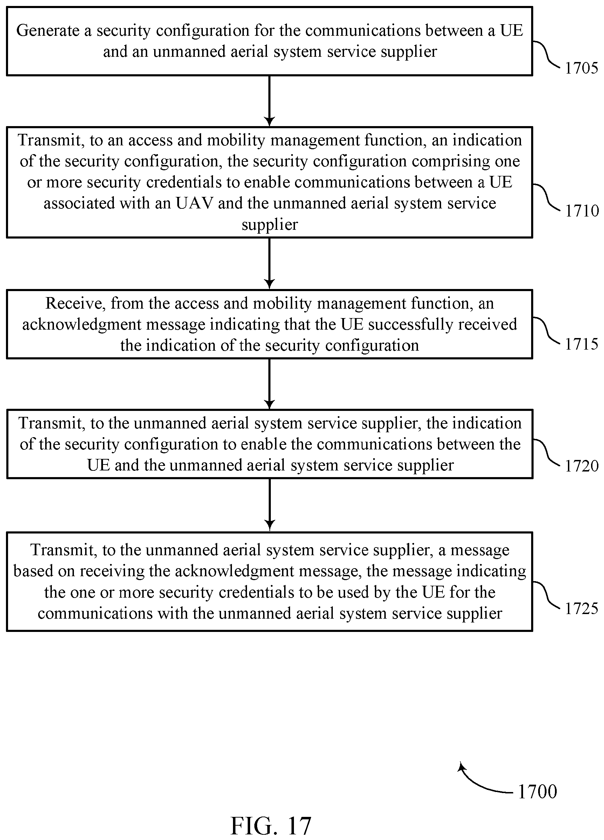

**FIG. 17** shows a flowchart illustrating a method 1700 that supports providing security credentials to UAVs in accordance with aspects of the present disclosure. The operations of method 1700 may be implemented by a network entity or its components as described herein (e.g., a UDM entity). For example, the operations of method 1700 may be performed by a communications manager as described with reference to FIGs. 10 through 13. In some examples, a network entity may execute a set of instructions to control the functional elements of the network entity to perform the functions described below. Additionally or alternatively, a network entity may perform aspects of the functions described below using special-purpose hardware.

At 1705, the network entity may generate a security configuration for the communications between a UE and an unmanned aerial system service supplier. The operations of 1705 may be performed according to the methods described herein. In some examples, aspects of the operations of 1705 may be performed by a security configuration generator as described with reference to FIGs. 10 through 13.

At 1710, the network entity may transmit, to an AMF, an indication of the security configuration, the security configuration including one or more security credentials to enable communications between the UE associated with an UAV and the unmanned aerial system service supplier. The operations of 1710 may be performed according to the methods described herein. In some examples, aspects of the operations of 1710 may be performed by a security configuration indicator as described with reference to FIGs. 10 through 13.

At 1715, the network entity may receive, from the AMF, an acknowledgment message indicating that the UE successfully received the indication of the security configuration. The operations of 1715 may be performed according to the methods described herein. In some examples, aspects of the operations of 1715 may be performed by a security acknowledgment component as described with reference to FIGs. 10 through 13.

At 1720, the network entity may transmit, to the unmanned aerial system service supplier, the indication of the security configuration to enable the communications between the UE and the unmanned aerial system service supplier. The operations of 1720 may be performed according to the methods described herein. In some examples, aspects of the operations of 1720 may be performed by a security configuration generator as described with reference to FIGs. 10 through 13.

At 1725, the network entity may transmit, to the unmanned aerial system service supplier, a message based at least in part on receiving the acknowledgment message, the message indicating the one or more security credentials to be used by the UE for the communications with the unmanned aerial system service supplier. The operations of 1725 may be performed according to the methods described herein. In some examples, aspects of the operations of 1725 may be performed by a security credentials indicator as described with reference to FIGs. 10 through 13.

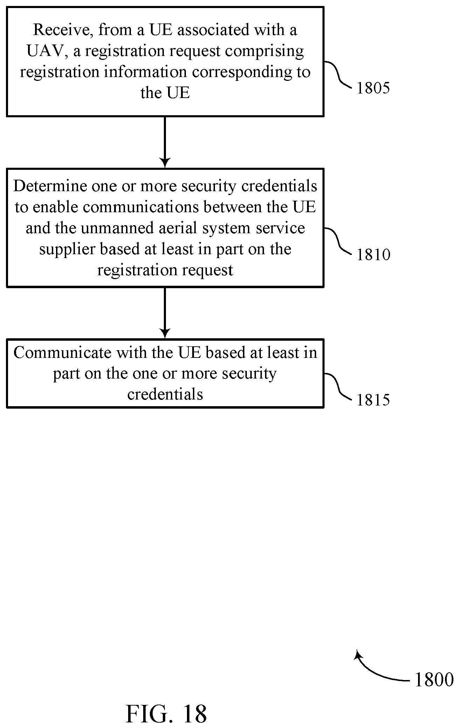

**FIG. 18** shows a flowchart illustrating a method 1800 that supports providing security credentials to UAVs in accordance with aspects of the present disclosure. The operations of method 1800 may be implemented by a network entity or its components as described herein. For example, the operations of method 1800 may be performed by a communications manager as described with reference to FIGs. 10 through 13. In some examples, a network entity may execute a set of instructions to control the functional elements of the network entity to perform the functions described below. Additionally or alternatively, a network entity may perform aspects of the functions described below using special-purpose hardware.

At 1805, the network entity may receive, from a UE associated with an UAV, a registration request including registration information corresponding to the UE. The operations of 1805 may be performed according to the methods described herein. In some examples, aspects of the operations of 1805 may be performed by a registration request reception component as described with reference to FIGs. 10 through 13.

At 1810, the network entity may determine one or more security credentials to enable communications between the UE and the unmanned aerial system service supplier based at least in part on the registration request. The operations of 1810 may be performed according to the methods described herein. In some examples, aspects of the operations of 1810 may be performed by a security determination component as described with reference to FIGs. 10 through 13.

At 1815, the network entity may communicate with the UE based at least in part on the one or more security credentials. The operations of 1815 may be performed according to the methods described herein. In some examples, aspects of the operations of 1815 may be performed by a communications component as described with reference to FIGs. 10 through 13.

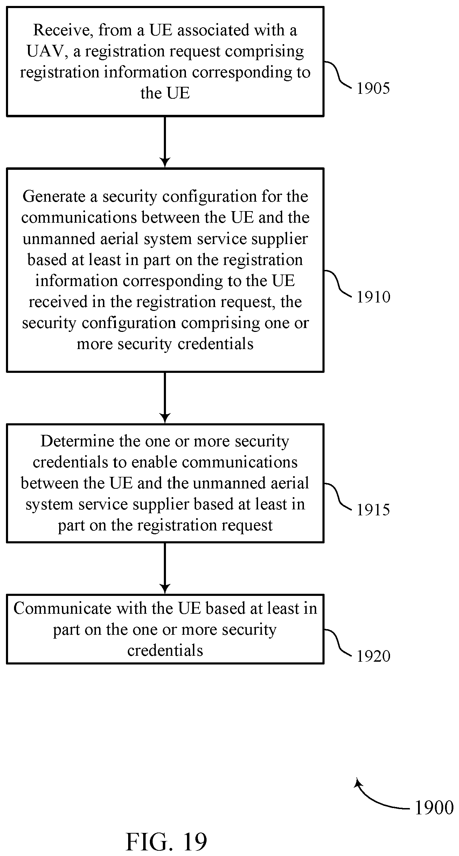

**FIG. 19** shows a flowchart illustrating a method 1900 that supports providing security credentials to UAVs in accordance with aspects of the present disclosure. The operations of method 1900 may be implemented by a network entity or its components as described herein. For example, the operations of method 1900 may be performed by a communications manager as described with reference to FIGs. 10 through 13. In some examples, a network entity may execute a set of instructions to control the functional elements of the network entity to perform the functions described below. Additionally or alternatively, a network entity may perform aspects of the functions described below using special-purpose hardware.

At 1905, the network entity may receive, from a UE associated with an UAV, a registration request including registration information corresponding to the UE. The operations of 1905 may be performed according to the methods described herein. In some examples, aspects of the operations of 1905 may be performed by a registration request reception component as described with reference to FIGs. 10 through 13.

At 1910, the network entity may generate a security configuration for the communications between the UE and the unmanned aerial system service supplier based at least in part on the registration information corresponding to the UE received in the registration request, the security configuration including one or more security credentials. The operations of 1910 may be performed according to the methods described herein. In some examples, aspects of the operations of 1910 may be performed by a security configuration determination component as described with reference to FIGs. 10 through 13.

At 1915, the network entity may determine the one or more security credentials to enable communications between the UE and the unmanned aerial system service supplier based at least in part on the registration request. The operations of 1915 may be performed according to the methods described herein. In some examples, aspects of the operations of 1915 may be performed by a security determination component as described with reference to FIGs. 10 through 13.

At 1920, the network entity may communicate with the UE based at least in part on the one or more security credentials. The operations of 1920 may be performed according to the methods described herein. In some examples, aspects of the operations of 1920 may be performed by a communications component as described with reference to FIGs. 10 through 13.

It should be noted that the methods described herein describe possible implementations, and that the operations and the steps may be rearranged or otherwise modified and that other implementations are possible. Further, aspects from two or more of the methods may be combined.

Although aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR networks. For example, the described techniques may be applicable to various other wireless communications systems such as Ultra Mobile Broadband (UMB), Institute of Electrical and Electronics Engineers (IEEE) 802.11 (Wi-Fi), IEEE 802.16 (WiMAX), IEEE 802.20, Flash-OFDM, as well as other systems and radio technologies not explicitly mentioned herein.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of') indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on."

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form in order to avoid obscuring the concepts of the described examples.

The description herein is provided to enable a person having ordinary skill in the art to make or use the disclosure. Various modifications to the disclosure will be apparent to a person having ordinary skill in the art, and the generic principles defined herein may be applied to other variations without departing from the scope of the appended claims.

## Claims

1. A method (1400) for wireless communication at a user equipment, UE, associated with an unmanned aerial vehicle, UAV, in a terrestrial cellular network, comprising:
performing (1405) a registration procedure with one or more network functions for communications with an unmanned aerial system service supplier, the one or more network functions comprising an access and mobility management function;
receiving (1410), from a unified data management entity via the access and mobility management function, an indication of a security configuration in a non-access stratum transport message, the security configuration comprising one or more security credentials to enable communications between the UE and the unmanned aerial system service supplier; and
communicating (1415) with the unmanned aerial system service supplier based at least in part on the one or more security credentials of the security configuration;
transmitting, to the unified data management entity via the access and mobility management function, an acknowledgment message indicating that the UE successfully received the indication of the security configuration, wherein the communicating with the unmanned aerial system service supplier is based at least in part on the acknowledgment message.

2. The method of claim 1, further comprising:
transmitting, to the unmanned aerial system service supplier, a registration request for the communications between the UE and the unmanned aerial system service supplier, the registration request comprising registration information corresponding to the UE.

3. The method of claim 2, further comprising:
determining to transmit the registration request to the unmanned aerial system service supplier based at least in part on an identity of the unmanned aerial system service supplier received in the indication of the security configuration; or
further comprising:
receiving, from the unmanned aerial system service supplier, a registration response message in response to the registration request, the registration response message comprising an identifier for the UE, wherein the communicating with the unmanned aerial system service supplier is based at least in part on the identifier for the UE in conjuncture with the security configuration; or
wherein the registration request is protected based at least in part on the one or more security credentials received from the unified data management entity; or
wherein the indication of the security configuration is received based at least in part on transmitting the registration request; or
wherein the registration request comprises a generic public subscription identifier of the UE, and wherein the indication of the security configuration is received based at least in part on the generic public subscription identifier of the UE.

4. The method of claim 1, further comprising:
determining to remove security credentials previously used by the UE for previous communications.

5. The method of claim 1, wherein the security configuration comprises a UE identity used for identifying the UE in the communications between the UE and the unmanned aerial system service supplier, a certificate for the communications between the UE and the unmanned aerial system service supplier, private and public security keys to enable the communications between the UE and the unmanned aerial system service supplier, one or more security keys to be used for by the UE for broadcasting a remote identifier of the UE and for verifying received remote identifiers broadcasted by additional UEs, an identifier of the unmanned aerial system service supplier, or a combination thereof; or
wherein the indication of the security configuration is received at a hardware component of the UE.

6. A method (1600) for wireless communication at a unified data management entity, comprising:
transmitting (1605), to an access and mobility management function, an indication of a security configuration, the security configuration comprising one or more security credentials to enable communications between a user equipment, UE, associated with an unmanned aerial vehicle, UAV, and an unmanned aerial system service supplier;
receiving (1610), from the access and mobility management function, an acknowledgment message indicating that the UE successfully received the indication of the security configuration; and
transmitting (1615), to the unmanned aerial system service supplier, a message based at least in part on receiving the acknowledgment message, the message indicating the one or more security credentials to be used by the UE for the communications with the unmanned aerial system service supplier.

7. The method of claim 6, wherein transmitting the message to the unmanned aerial system service supplier further comprises:
generating the security configuration for the communications between the UE and the unmanned aerial system service supplier; and
transmitting, to the unmanned aerial system service supplier, the indication of the security configuration to enable the communications between the UE and the unmanned aerial system service supplier;
wherein the security configuration is preferably generated based at least in part on the UE registering to a network preferably comprising the unified data management entity and the access and mobility management function, no security configuration being previously delivered to the UE, a security refreshing for the UE, a trigger received from the unmanned aerial system service supplier, or a combination thereof.

8. The method of claim 6, further comprising:
receiving, from the unmanned aerial system service supplier, the indication of the security configuration, wherein transmitting the indication of the security configuration to the access and mobility management function is based at least in part on receiving the indication of the security configuration from the unmanned aerial system service supplier.

9. The method of claim 8, wherein transmitting the message to the unmanned aerial system service supplier further comprises:
transmitting, to the unmanned aerial system service supplier, a parameter provision information message comprising the acknowledgment message indicating that the UE successfully received the indication of the security configuration; or
wherein receiving the indication of the security configuration comprises:
receiving, from the unmanned aerial system service supplier, the indication of the security configuration via a unified data management services message, a network exposure function update message, or a combination thereof.

10. The method of claim 6, wherein transmitting the indication of the security configuration comprises:
transmitting, to the access and mobility management function, a unified data management configuration update message of parameters for the UE, wherein the unified data management configuration update message comprises the indication of the security configuration; or
wherein the security configuration comprises a UE identity used for identifying the UE in the communications between the UE and the unmanned aerial system service supplier, a certificate for the communications between the UE and the unmanned aerial system service supplier, private and public security keys to enable the communications between the UE and the unmanned aerial system service supplier, one or more security keys to be used by the UE for broadcasting a remote identifier of the UE and for verifying received remote identifiers broadcasted by additional UEs, an identifier of the unmanned aerial system service supplier, or a combination thereof.

11. A method (1800) for wireless communication at an unmanned aerial system service supplier, comprising:
receiving (1805), from a user equipment, UE, associated with an unmanned aerial vehicle, UAV, a registration request comprising registration information corresponding to the UE;
receiving, from the unified data management entity, a message based at least in part on an acknowledgment message received by the unified data management entity from the UE, the message indicating one or more security credentials to be used by the UE for the communications with the unmanned aerial system service supplier;
determining (1810) the one or more security credentials to enable communications between the UE and the unmanned aerial system service supplier based at least in part on the registration request; and
communicating (1815) with the UE based at least in part on the one or more security credentials.

12. The method of claim 11, wherein determining the one or more security credentials comprises:
receiving, from a unified data management entity, an indication of a security configuration, the security configuration comprising the one or more security credentials to enable the communications between the UE and the unmanned aerial system service supplier; or
wherein determining the one or more security credentials comprises:
generating a security configuration for the communications between the UE and the unmanned aerial system service supplier based at least in part on the registration information corresponding to the UE received in the registration request, the security configuration comprising the one or more security credentials.

13. An apparatus (605) for wireless communication at a user equipment, UE, associated with an unmanned aerial vehicle, UAV, in a terrestrial cellular network, comprising:
means for performing (615) a registration procedure with one or more network functions for communications with an unmanned aerial system service supplier, the one or more network functions comprising an access and mobility management function;
means for receiving (610), from a unified data management entity via the access and mobility management function, an indication of a security configuration in a non-access stratum transport message, the security configuration comprising one or more security credentials to enable communications between the UE and the unmanned aerial system service supplier;
means for communicating (615) with the unmanned aerial system service supplier based at least in part on the one or more security credentials of the security configuration; and
means for transmitting (620), to the unified data management entity via the access and mobility management function, an acknowledgment message indicating that the UE successfully received the indication of the security configuration, wherein the communicating with the unmanned aerial system service supplier is based at least in part on the acknowledgment message.

14. The apparatus of claim 13, further comprising:
means for performing the method according to one of the claims 2-5.

15. A computer program comprising code which when executed performs the metod according to one of the claims 1-12.

## Patentansprüche

1. Ein Verfahren (1400) zur drahtlosen Kommunikation an einem Benutzergerät, UE, das einem unbemannten Luftfahrzeug, UAV, in einem terrestrischen Mobilfunknetz zugeordnet ist, umfassend:
Durchführen (1405) einer Registrierungsprozedur mit einer oder mehreren Netzfunktionen zur Kommunikation mit einem Dienstanbieter eines unbemannten Luftsystems, wobei die eine oder die mehreren Netzfunktionen eine Zugangs- und Mobilitätsverwaltungsfunktion umfassen;
Empfangen (1410), von einer vereinheitlichten Datenverwaltungsentität über die Zugangs- und Mobilitätsverwaltungsfunktion, einer Angabe einer Sicherheitskonfiguration in einer Nicht-Zugangs-Stratum-Transportnachricht, wobei die Sicherheitskonfiguration eine oder mehrere Sicherheitsberechtigungsnachweise umfasst, um Kommunikationen zwischen dem UE und dem Dienstanbieter des unbemannten Luftsystems zu ermöglichen; und
Kommunizieren (1415) mit dem Dienstanbieter des unbemannten Luftsystems basierend zumindest teilweise auf dem einen oder den mehreren Sicherheitsberechtigungsnachweisen der Sicherheitskonfiguration;
Übertragen, an die vereinheitlichte Datenverwaltungsentität über die Zugangs- und Mobilitätsverwaltungsfunktion, einer Bestätigungsnachricht, die angibt, dass das UE die Angabe der Sicherheitskonfiguration erfolgreich empfangen hat, wobei das Kommunizieren mit dem Dienstanbieter des unbemannten Luftsystems zumindest teilweise auf der Bestätigungsnachricht basiert.

2. Das Verfahren nach Anspruch 1, ferner umfassend:
Übertragen, an den Dienstanbieter des unbemannten Luftsystems, einer Registrierungsanforderung für die Kommunikationen zwischen dem UE und dem Dienstanbieter des unbemannten Luftsystems, wobei die Registrierungsanforderung dem UE entsprechende Registrierungsinformation umfasst.

3. Das Verfahren nach Anspruch 2, ferner umfassend:
Bestimmen, die Registrierungsanforderung an den Dienstanbieter des unbemannten Luftsystems zu übertragen, basierend zumindest teilweise auf einer Identität des Dienstanbieters des unbemannten Luftsystems, die in der Angabe der Sicherheitskonfiguration empfangen wird; oder
ferner umfassend:
Empfangen, von dem Dienstanbieter des unbemannten Luftsystems, einer Registrierungsantwortnachricht als Antwort auf die Registrierungsanforderung, wobei die Registrierungsantwortnachricht eine Kennung für das UE umfasst, wobei das Kommunizieren mit dem Dienstanbieter des unbemannten Luftsystems zumindest teilweise auf der Kennung für das UE in Verbindung mit der Sicherheitskonfiguration basiert; oder
wobei die Registrierungsanforderung basierend zumindest teilweise auf dem einen oder den mehreren Sicherheitsberechtigungsnachweisen geschützt wird, die von der vereinheitlichten Datenverwaltungsentität empfangen werden; oder
wobei die Angabe der Sicherheitskonfiguration basierend zumindest teilweise auf dem Übertragen der Registrierungsanforderung empfangen wird; oder
wobei die Registrierungsanforderung eine generische öffentliche Abonnementkennung des UE umfasst, und wobei die Angabe der Sicherheitskonfiguration basierend zumindest teilweise auf der generischen öffentlichen Abonnementkennung des UE empfangen wird.

4. Das Verfahren nach Anspruch 1, ferner umfassend:
Bestimmen, Sicherheitsberechtigungsnachweise zu entfernen, die zuvor von dem UE für vorherige Kommunikationen verwendet wurden.

5. Das Verfahren nach Anspruch 1, wobei die Sicherheitskonfiguration eine UE-Identität, die zum Identifizieren des UE in den Kommunikationen zwischen dem UE und dem Dienstanbieter des unbemannten Luftsystems verwendet wird, ein Zertifikat für die Kommunikationen zwischen dem UE und dem Dienstanbieter des unbemannten Luftsystems, private und öffentliche Sicherheitsschlüssel, um die Kommunikationen zwischen dem UE und dem Dienstanbieter des unbemannten Luftsystems zu ermöglichen, einen oder mehrere Sicherheitsschlüssel, die von dem UE zum Rundsenden einer entfernten Kennung des UE und zum Verifizieren empfangener entfernter Kennungen, die von zusätzlichen UEs rundgesendet werden, verwendet werden sollen, eine Kennung des Dienstanbieters des unbemannten Luftsystems oder eine Kombination davon umfasst; oder
wobei die Angabe der Sicherheitskonfiguration an einer Hardwarekomponente des UE empfangen wird.

6. Ein Verfahren (1600) zur drahtlosen Kommunikation an einer vereinheitlichten Datenverwaltungsentität, umfassend:
Übertragen (1605), an eine Zugangs- und Mobilitätsverwaltungsfunktion, einer Angabe einer Sicherheitskonfiguration, wobei die Sicherheitskonfiguration eine oder mehrere Sicherheitsberechtigungsnachweise umfasst, um Kommunikationen zwischen einem Benutzergerät, UE, das einem unbemannten Luftfahrzeug, UAV, und einem Dienstanbieter eines unbemannten Luftsystems zugeordnet ist, zu ermöglichen;
Empfangen (1610), von der Zugangs- und Mobilitätsverwaltungsfunktion, einer Bestätigungsnachricht, die angibt, dass das UE die Angabe der Sicherheitskonfiguration erfolgreich empfangen hat; und
Übertragen (1615), an den Dienstanbieter des unbemannten Luftsystems, einer Nachricht basierend zumindest teilweise auf dem Empfangen der Bestätigungsnachricht, wobei die Nachricht den einen oder die mehreren Sicherheitsberechtigungsnachweise angibt, die von dem UE für die Kommunikationen mit dem Dienstanbieter des unbemannten Luftsystems zu verwenden sind.

7. Das Verfahren nach Anspruch 6, wobei das Übertragen der Nachricht an den Dienstanbieter des unbemannten Luftsystems ferner umfasst:
Erzeugen der Sicherheitskonfiguration für die Kommunikationen zwischen dem UE und dem Dienstanbieter des unbemannten Luftsystems; und
Übertragen, an den Dienstanbieter des unbemannten Luftsystems, der Angabe der Sicherheitskonfiguration, um die Kommunikationen zwischen dem UE und dem Dienstanbieter des unbemannten Luftsystems zu ermöglichen;
wobei die Sicherheitskonfiguration vorzugsweise basierend zumindest teilweise darauf erzeugt wird, dass sich das UE bei einem Netz registriert, das vorzugsweise die vereinheitlichte Datenverwaltungsentität und die Zugangs- und
Mobilitätsverwaltungsfunktion umfasst, wobei zuvor keine Sicherheitskonfiguration an das UE geliefert wurde, eine Sicherheitserneuung für das UE, ein Auslöser, der von dem Dienstanbieter des unbemannten Luftsystems empfangen wird, oder eine Kombination davon.

8. Das Verfahren nach Anspruch 6, ferner umfassend:
Empfangen, von dem Dienstanbieter des unbemannten Luftsystems, der Angabe der Sicherheitskonfiguration, wobei das Übertragen der Angabe der Sicherheitskonfiguration an die Zugangs- und Mobilitätsverwaltungsfunktion zumindest teilweise auf dem Empfangen der Angabe der Sicherheitskonfiguration von dem Dienstanbieter des unbemannten Luftsystems basiert.

9. Das Verfahren nach Anspruch 8, wobei das Übertragen der Nachricht an den Dienstanbieter des unbemannten Luftsystems ferner umfasst:
Übertragen, an den Dienstanbieter des unbemannten Luftsystems, einer Parameterbereitstellungsinformationsnachricht, die die Bestätigungsnachricht umfasst, die angibt, dass das UE die Angabe der Sicherheitskonfiguration erfolgreich empfangen hat; oder
wobei das Empfangen der Angabe der Sicherheitskonfiguration umfasst:
Empfangen, von dem Dienstanbieter des unbemannten Luftsystems, der Angabe der Sicherheitskonfiguration über eine vereinheitlichte Datenverwaltungsdienstnachricht, eine Netzexpositionsfunktionsaktualisierungsnachricht oder eine Kombination davon.

10. Das Verfahren nach Anspruch 6, wobei das Übertragen der Angabe der Sicherheitskonfiguration umfasst:
Übertragen, an die Zugangs- und Mobilitätsverwaltungsfunktion, einer vereinheitlichten Datenverwaltungskonfigurationsaktualisierungsnachricht von Parametern für das UE, wobei die vereinheitlichte Datenverwaltungskonfigurationsaktualisierungsnachricht die Angabe der Sicherheitskonfiguration umfasst; oder
wobei die Sicherheitskonfiguration eine UE-Identität, die zum Identifizieren des UE in den Kommunikationen zwischen dem UE und dem Dienstanbieter des unbemannten Luftsystems verwendet wird, ein Zertifikat für die Kommunikationen zwischen dem UE und dem Dienstanbieter des unbemannten Luftsystems, private und öffentliche Sicherheitsschlüssel, um die Kommunikationen zwischen dem UE und dem Dienstanbieter des unbemannten Luftsystems zu ermöglichen, einen oder mehrere Sicherheitsschlüssel, die von dem UE zum Rundsenden einer entfernten Kennung des UE und zum Verifizieren empfangener entfernter Kennungen, die von zusätzlichen UEs rundgesendet werden, verwendet werden sollen, eine Kennung des Dienstanbieters des unbemannten Luftsystems oder eine Kombination davon umfasst.

11. Ein Verfahren (1800) zur drahtlosen Kommunikation an einem Dienstanbieter eines unbemannten Luftsystems, umfassend:
Empfangen (1805), von einem Benutzergerät, UE, das einem unbemannten Luftfahrzeug, UAV, zugeordnet ist, einer Registrierungsanforderung, die dem UE entsprechende Registrierungsinformation umfasst;
Empfangen, von der vereinheitlichten Datenverwaltungsentität, einer Nachricht basierend zumindest teilweise auf einer Bestätigungsnachricht, die von der vereinheitlichten Datenverwaltungsentität von dem UE empfangen wird, wobei die Nachricht einen oder mehrere Sicherheitsberechtigungsnachweise angibt, die von dem UE für die Kommunikationen mit dem Dienstanbieter des unbemannten Luftsystems zu verwenden sind;
Bestimmen (1810) des einen oder der mehreren Sicherheitsberechtigungsnachweise, um Kommunikationen zwischen dem UE und dem Dienstanbieter des unbemannten Luftsystems zu ermöglichen, basierend zumindest teilweise auf der Registrierungsanforderung; und
Kommunizieren (1815) mit dem UE basierend zumindest teilweise auf dem einen oder den mehreren Sicherheitsberechtigungsnachweisen.

12. Das Verfahren nach Anspruch 11, wobei das Bestimmen des einen oder der mehreren Sicherheitsberechtigungsnachweise umfasst:
Empfangen, von einer vereinheitlichten Datenverwaltungsentität, einer Angabe einer Sicherheitskonfiguration, wobei die Sicherheitskonfiguration den einen oder die mehreren Sicherheitsberechtigungsnachweise umfasst, um die Kommunikationen zwischen dem UE und dem Dienstanbieter des unbemannten Luftsystems zu ermöglichen; oder
wobei das Bestimmen des einen oder der mehreren Sicherheitsberechtigungsnachweise umfasst:
Erzeugen einer Sicherheitskonfiguration für die Kommunikationen zwischen dem UE und dem Dienstanbieter des unbemannten Luftsystems basierend zumindest teilweise auf der in der Registrierungsanforderung empfangenen dem UE entsprechenden Registrierungsinformation, wobei die Sicherheitskonfiguration den einen oder die mehreren Sicherheitsberechtigungsnachweise umfasst.

13. Eine Vorrichtung (605) zur drahtlosen Kommunikation an einem Benutzergerät, UE, das einem unbemannten Luftfahrzeug, UAV, in einem terrestrischen Mobilfunknetz zugeordnet ist, umfassend:
Mittel zum Durchführen (615) einer Registrierungsprozedur mit einer oder mehreren Netzfunktionen zur Kommunikation mit einem Dienstanbieter eines unbemannten Luftsystems, wobei die eine oder die mehreren Netzfunktionen eine Zugangs- und Mobilitätsverwaltungsfunktion umfassen;
Mittel zum Empfangen (610), von einer vereinheitlichten Datenverwaltungsentität über die Zugangs- und Mobilitätsverwaltungsfunktion, einer Angabe einer Sicherheitskonfiguration in einer Nicht-Zugangs-Stratum-Transportnachricht, wobei die Sicherheitskonfiguration einen oder mehrere Sicherheitsberechtigungsnachweise umfasst, um Kommunikationen zwischen dem UE und dem Dienstanbieter des unbemannten Luftsystems zu ermöglichen;
Mittel zum Kommunizieren (615) mit dem Dienstanbieter des unbemannten Luftsystems basierend zumindest teilweise auf dem einen oder den mehreren Sicherheitsberechtigungsnachweisen der Sicherheitskonfiguration; und
Mittel zum Übertragen (620), an die vereinheitlichte Datenverwaltungsentität über die Zugangs- und Mobilitätsverwaltungsfunktion, einer Bestätigungsnachricht, die angibt, dass das UE die Angabe der Sicherheitskonfiguration erfolgreich empfangen hat, wobei das Kommunizieren mit dem Dienstanbieter des unbemannten Luftsystems zumindest teilweise auf der Bestätigungsnachricht basiert.

14. Die Vorrichtung nach Anspruch 13, ferner umfassend:
Mittel zum Durchführen des Verfahrens nach einem der Ansprüche 2-5.

15. Ein Computerprogramm, das Code umfasst, der, wenn er ausgeführt wird, das Verfahren nach einem der Ansprüche 1-12 durchführt.

## Revendications

1. Un procédé (1400) de communication sans fil au niveau d'un équipement utilisateur, UE, associé à un véhicule aérien sans pilote, UAV, dans un réseau cellulaire terrestre, comprenant :
la réalisation (1405) d'une procédure d'enregistrement avec une ou plusieurs fonctions réseau pour des communications avec un fournisseur de services de système aérien sans pilote, les une ou plusieurs fonctions réseau comprenant une fonction de gestion d'accès et de mobilité ;
la réception (1410), à partir d'une entité de gestion de données unifiée via la fonction de gestion d'accès et de mobilité, d'une indication d'une configuration de sécurité dans un message de transport de couche sans accès, la configuration de sécurité comprenant une ou plusieurs accréditations de sécurité pour permettre des communications entre l'UE et le fournisseur de services de système aérien sans pilote ; et
la communication (1415) avec le fournisseur de services de système aérien sans pilote sur la base au moins en partie des une ou plusieurs accréditations de sécurité de la configuration de sécurité ;
la transmission, à l'entité de gestion de données unifiée via la fonction de gestion d'accès et de mobilité, d'un message d'accusé de réception indiquant que l'UE a reçu avec succès l'indication de la configuration de sécurité, dans lequel la communication avec le fournisseur de services de système aérien sans pilote est basée au moins en partie sur le message d'accusé de réception.

2. Le procédé selon la revendication 1, comprenant en outre :
la transmission, au fournisseur de services de système aérien sans pilote, d'une requête d'enregistrement pour les communications entre l'UE et le fournisseur de services de système aérien sans pilote, la requête d'enregistrement comprenant des informations d'enregistrement correspondant à l'UE.

3. Le procédé selon la revendication 2, comprenant en outre :
la détermination de transmettre la requête d'enregistrement au fournisseur de services de système aérien sans pilote sur la base au moins en partie d'une identité du fournisseur de services de système aérien sans pilote reçue dans l'indication de la configuration de sécurité ; ou
comprenant en outre :
la réception, à partir du fournisseur de services de système aérien sans pilote, d'un message de réponse d'enregistrement en réponse à la requête d'enregistrement, le message de réponse d'enregistrement comprenant un identifiant pour l'UE, dans lequel la communication avec le fournisseur de services de système aérien sans pilote est basée au moins en partie sur l'identifiant pour l'UE conjointement avec la configuration de sécurité ; ou
dans lequel la requête d'enregistrement est protégée au moins en partie sur la base des un ou plusieurs accréditations de sécurité reçues à partir de l'entité de gestion de données unifiée ; ou
dans lequel l'indication de la configuration de sécurité est reçue sur la base au moins en partie de la transmission de la requête d'enregistrement ; ou
dans lequel la requête d'enregistrement comprend un identifiant d'abonnement public générique de l'UE, et dans lequel l'indication de la configuration de sécurité est reçue sur la base au moins en partie de l'identifiant d'abonnement public générique de l'UE.

4. Le procédé selon la revendication 1, comprenant en outre :
la détermination de supprimer des accréditations de sécurité précédemment utilisées par l'UE pour des communications précédentes.

5. Le procédé selon la revendication 1, dans lequel la configuration de sécurité comprend une identité UE utilisée pour identifier l'UE dans les communications entre l'UE et le fournisseur de services de système aérien sans pilote, un certificat pour les communications entre l'UE et le fournisseur de services de système aérien sans pilote, des clés de sécurité privées et publiques pour permettre les communications entre l'UE et le fournisseur de services de système aérien sans pilote, une ou plusieurs clés de sécurité à utiliser par l'UE pour le broadcast d'un identifiant distant de l'UE et pour vérifier des identifiants distants reçus par un broadcast par des UE supplémentaires, un identifiant du fournisseur de services de systèmes aériens sans pilote, ou une combinaison de ceux-ci ; ou
dans lequel l'indication de la configuration de sécurité est reçue au niveau d'un composant matériel de l'UE.

6. Un procédé (1600) de communication sans fil au niveau d'une entité de gestion de données unifiée, comprenant :
la transmission (1605), à une fonction de gestion d'accès et de mobilité, d'une indication d'une configuration de sécurité, la configuration de sécurité comprenant une ou plusieurs accréditations de sécurité pour permettre des communications entre un équipement utilisateur, UE, associé à un véhicule aérien sans pilote, UAV, et à un fournisseur de services de système aérien sans pilote ;
la réception (1610), à partir de la fonction de gestion d'accès et de mobilité, d'un message d'accusé de réception indiquant que l'UE a reçu avec succès l'indication de la configuration de sécurité ; et
la transmission (1615), au fournisseur de services de système aérien sans pilote, d'un message sur la base au moins en partie de la réception du message d'accusé de réception, le message indiquant les une ou plusieurs accréditations de sécurité à utiliser par l'UE pour les communications avec le fournisseur de services de système aérien sans pilote.

7. Le procédé selon la revendication 6, dans lequel la transmission du message au fournisseur de services de système aérien sans pilote comprend en outre :
la génération de la configuration de sécurité pour les communications entre l'UE et le fournisseur de services de système aérien sans pilote ; et
la transmission, au fournisseur de services de système aérien sans pilote, de l'indication de la configuration de sécurité pour permettre les communications entre l'UE et le fournisseur de services de système aérien sans pilote ;
dans lequel la configuration de sécurité est de préférence générée sur la base au moins en partie de l'enregistrement de l'UE sur un réseau comprenant de préférence l'entité de gestion de données unifiée et la fonction de gestion d'accès et de mobilité, aucune configuration de sécurité n'étant précédemment délivrée à l'UE, un rafraîchissement de sécurité pour l'UE, un déclencheur reçu à partir du fournisseur de services de système aérien sans pilote, ou une combinaison de ceux-ci.

8. Le procédé selon la revendication 6, comprenant en outre :
la réception, à partir du fournisseur de services de système aérien sans pilote, de l'indication de la configuration de sécurité, dans lequel la transmission de l'indication de la configuration de sécurité à la fonction de gestion d'accès et de mobilité est basée au moins en partie sur la réception de l'indication de la configuration de sécurité à partir du fournisseur de services de système aérien sans pilote.

9. Le procédé selon la revendication 8, dans lequel la transmission du message au fournisseur de services de système aérien sans pilote comprend en outre :
la transmission, au fournisseur de services de système aérien sans pilote, d'un message d'information de délivrance de paramètre comprenant le message d'accusé de réception indiquant que l'UE a reçu avec succès l'indication de la configuration de sécurité ; ou
dans lequel la réception de l'indication de la configuration de sécurité comprend :
la réception, à partir du fournisseur de services de système aérien sans pilote, de l'indication de la configuration de sécurité via un message de services de gestion de données unifiée, un message de mise à jour de fonction d'exposition réseau, ou une combinaison de ceux-ci.

10. Le procédé selon la revendication 6, dans lequel la transmission de l'indication de la configuration de sécurité comprend :
la transmission, à la fonction de gestion d'accès et de mobilité, d'un message de mise à jour de configuration de gestion de données unifiée de paramètres pour l'UE, dans lequel le message de mise à jour de configuration de gestion de données unifiée comprend l'indication de la configuration de sécurité ; ou
dans lequel la configuration de sécurité comprend une identité UE utilisée pour identifier l'UE dans les communications entre l'UE et le fournisseur de services de système aérien sans pilote, un certificat pour les communications entre l'UE et le fournisseur de services de système aérien sans pilote, de clés de sécurité privées et publiques pour permettre les communications entre l'UE et le fournisseur de services de système aérien sans pilote, une ou plusieurs clés de sécurité à utiliser par l'UE pour le broadcast d'un identifiant distant de l'UE et pour vérifier des identifiants distants reçus par un broadcast par des UE supplémentaires, un identifiant du fournisseur de services de systèmes aériens sans pilote, ou une combinaison de ceux-ci.

11. Un procédé (1800) de communication sans fil au niveau d'un fournisseur de services de système aérien sans pilote, comprenant :
la réception (1805), à partir d'un équipement utilisateur, UE, associé à un véhicule aérien sans pilote, UAV, d'une requête d'enregistrement comprenant des informations d'enregistrement correspondant à l'UE ;
la réception, à partir de l'entité de gestion unifiée des données, d'un message sur la base au moins en partie d'un message d'accusé de réception reçu par l'entité de gestion de données unifiée de l'UE, le message indiquant une ou plusieurs accréditations de sécurité à utiliser par l'UE pour les communications avec le fournisseur de services de système aérien sans pilote ;
la détermination (1810) des une ou plusieurs accréditations de sécurité pour permettre des communications entre l'UE et le fournisseur de services de système aérien sans pilote sur la base au moins en partie de la requête d'enregistrement ; et
la communication (1815) avec l'UE sur la base au moins en partie des une ou plusieurs accréditations de sécurité.

12. Le procédé selon la revendication 11, dans lequel la détermination des une ou plusieurs accréditations de sécurité comprend :
la réception, à partir d'une entité de gestion de données unifiée, d'une indication d'une configuration de sécurité, la configuration de sécurité comprenant les une ou plusieurs accréditations de sécurité pour permettre les communications entre l'UE et le fournisseur de services de système aérien sans pilote ; ou
dans lequel la détermination des une ou plusieurs accréditations de sécurité comprend :
la génération d'une configuration de sécurité pour les communications entre l'UE et le fournisseur de services de système aérien sans pilote sur la base au moins en partie des informations d'enregistrement correspondant à l'UE reçues dans la requête d'enregistrement, la configuration de sécurité comprenant les une ou plusieurs accréditations de sécurité.

13. Un appareil (605) pour la communication sans fil au niveau d'un équipement utilisateur, UE, associé à un véhicule aérien sans pilote, UAV, dans un réseau cellulaire terrestre, comprenant :
un moyen pour réaliser (615) une procédure d'enregistrement avec une ou plusieurs fonctions réseau pour des communications avec un fournisseur de services de système aérien sans pilote, les une ou plusieurs fonctions réseau comprenant une fonction de gestion d'accès et de mobilité ;
un moyen pour recevoir (610), à partir d'une entité de gestion de données unifiée via la fonction de gestion d'accès et de mobilité, une indication d'une configuration de sécurité dans un message de transport de couche sans accès, la configuration de sécurité comprenant une ou plusieurs accréditations de sécurité pour permettre des communications entre l'UE et le fournisseur de services de système aérien sans pilote ;
un moyen pour communiquer (615) avec le fournisseur de services de système aérien sans pilote sur la base au moins en partie des une ou plusieurs accréditations de sécurité de la configuration de sécurité ; et
un moyen pour transmettre (620), à l'entité de gestion de données unifiée via la fonction de gestion d'accès et de mobilité, d'un message d'accusé de réception indiquant que l'UE a reçu avec succès l'indication de la configuration de sécurité, dans lequel la communication avec le fournisseur de services de système aérien sans pilote est basée au moins en partie sur le message d'accusé de réception.

14. L'appareil selon la revendication 13, comprenant en outre :
des moyens pour réaliser le procédé selon une des revendications 2 à 5.

15. Un programme de calculateur comprenant un code qui, lorsqu'il est exécuté, réalise le procédé selon une des revendications 1 à 12.
